(19) Europäisches Patentamt
European Patent Office
Office européen des brevets

(11) EP 3 851 489 A1

(12) # EUROPEAN PATENT APPLICATION

published in accordance with Art. 153(4) EPC

(43) Date of publication:
**21.07.2021 Bulletin 2021/29**

(21) Application number: **19858754.5**

(22) Date of filing: **02.09.2019**

(51) Int Cl.:
***C08L 23/16*** *(2006.01)*
***B60C 1/00*** *(2006.01)*
***C08C 19/00*** *(2006.01)*
***C08F 210/00*** *(2006.01)*
***C08F 236/04*** *(2006.01)*
***C08K 3/013*** *(2018.01)*
***C08L 15/00*** *(2006.01)*
***C08L 23/26*** *(2006.01)*
***C08L 101/00*** *(2006.01)*

(86) International application number:
**PCT/JP2019/034469**

(87) International publication number:
**WO 2020/054484 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **14.09.2018 JP 2018172902**

(71) Applicant: **BRIDGESTONE CORPORATION**
**Chuo-ku**
**Tokyo 104-8340 (JP)**

(72) Inventors:
- **HOTTA, Aya**
  **Tokyo 104-8340 (JP)**
- **TAKANO, Shigenaga**
  **Tokyo 104-8340 (JP)**
- **SHIONO, Saaya**
  **Tokyo 104-8340 (JP)**

(74) Representative: **Oxley, Robin John George**
**Marks & Clerk LLP**
**15 Fetter Lane**
**London EC4A 1BW (GB)**

(54) **MODIFIED MULTI-COMPONENT COPOLYMER, RUBBER COMPOSITION, RESIN COMPOSITION, TIRE AND RESIN PRODUCT**

(57) Provided are: a modified multicomponent copolymer, in which a polymer chain of a multicomponent copolymer containing a conjugated diene unit, a non-conjugated olefin unit and an aromatic vinyl unit is modified with a functional group containing at least one atom selected from an oxygen atom, a nitrogen atom and a silicon atom, and which can express low heat generation properties along with high durability, and also a rubber composition, a resin composition, a tire and a resin product containing the modified multicomponent copolymer.



Printed by Jouve, 75001 PARIS (FR)

## Description

Technical Field

The present invention relates to a modified multicomponent copolymer, a rubber composition, a resin composition, a tire and a resin product.

Background Art

In general, rubber products such as tires, conveyor belts, rubber crawlers, hoses, as well as those of vibration-proof rubber or seismic isolation rubber for use in vibration-proof devices or base-isolation devices are required to have durability, and for satisfying such requirements, rubber materials having high durability are used.

As a rubber material having high durability, for example, PTL 1 discloses a multicomponent copolymer containing a conjugated diene unit, a non-conjugated olefin unit and an aromatic vinyl unit, and says that, using the multicomponent copolymer, the durability such as cracking-resistant growth potential of the rubber components and the rubber members can be improved.

Citation List

Patent Literature

PTL 1: WO2015/190072

Summary of Invention

Technical Problem

Recently, performance requirements for the above-mentioned rubber products have become increasingly severer, and as additional requirement, the products have become required to have low heat generation properties. However, the multicomponent copolymer described in PTL 1 could not sufficiently satisfy the requirements as the case may be, and a further improvement in point of low heat generation properties is required.

The present invention has been made in consideration of such situations, and its object is to provide a modified multicomponent copolymer capable of expressing low heat generation properties along with high durability, and a rubber composition, a resin composition, a tire and a resin product containing the modified multicomponent copolymer.

Solution to Problem

The present inventors have made assiduous studies for solving the above-mentioned problems, and as a result, have found that the present invention having the following constitution can solve the problems.

1. A modified multicomponent copolymer in which a polymer chain of a multicomponent copolymer containing a conjugated diene unit, a non-conjugated olefin unit and an aromatic vinyl unit is modified with a functional group containing at least one atom selected from an oxygen atom, a nitrogen atom and a silicon atom.
2. A rubber composition containing a rubber component that contains the modified multicomponent copolymer of the above 1.
3. A resin composition containing the modified multicomponent copolymer of the above 1.
4. A tire using the rubber composition of the above 2.
5. A resin product using the resin composition of the above 3.

Advantageous Effects of Invention

According to the present invention, there can be provided a modified multicomponent copolymer capable of expressing low heat generation properties along with high durability, and a rubber composition, a resin composition, a tire and a resin product containing the modified multicomponent copolymer.

Brief Description of Drawing

Fig. 1 is an explanatory view of a partial longitudinal cross-sectional front elevation of one example of a carbon

black production furnace for producing carbon black.

Description of Embodiments

Hereinunder embodiments of the present invention (hereinunder this may be referred to as "the present embodiment") are described. In the following description, the numerical values of the upper limit and the lower limit in the expression of "or more", "or less", and "XX to XXX" relating to a numerical range can be combined in any desired manner, and the numerical values in Examples can be the upper limit or the lower limit.

[Modified Multicomponent Copolymer]

The modified multicomponent copolymer of the present embodiment is one prepared by modifying a polymer chain of a multicomponent copolymer containing a conjugated diene unit, a non-conjugated olefin unit and an aromatic vinyl unit, with a functional group containing at least one atom selected from an oxygen atom, a nitrogen atom and a silicon atom. The multicomponent copolymer has high durability, but when used in a rubber composition, the copolymer could not often satisfy performance requirements for low heat generation properties owing to affinity with a filler such as carbon black or silica contained in the rubber composition. In the present embodiment, a polymer chain of the multicomponent copolymer is modified with a functional group containing at least one atom selected from an oxygen atom, a nitrogen atom and a silicon atom having affinity with a filler so as to improve the affinity of the multicomponent copolymer with a filler to thereby enable the resultant multicomponent copolymer to express low heat generation properties along with high durability. Hereinunder the modified multicomponent copolymer of the present embodiment is described in detail.

(Multicomponent Copolymer)

The multicomponent copolymer for use in the present embodiment contains a conjugated diene unit, a non-conjugated olefin unit and an aromatic vinyl unit. In the present embodiment, the multicomponent copolymer can be composed of a conjugated diene unit, a non-conjugated olefin unit and an aromatic vinyl unit alone, or can contain any other monomer unit. Regarding the characteristics of the units contained in the multicomponent copolymer for use in the present embodiment, the conjugated diene unit enables vulcanization of the multicomponent copolymer and improves elongation and strength as rubber; the non-conjugated olefin unit improves durability such as fracture characteristics in such a manner that the crystal component derived from the non-conjugated olefin unit fractures when greatly deformed to cause energy dissipation; and the aromatic vinyl unit improves processability of the multicomponent copolymer. The multicomponent copolymer for use in the present embodiment contains these units as combined, and therefore, when used in a rubber composition, it exhibits especially excellent performance of durability such as fracture characteristics.

The conjugated diene unit is a structural unit derived from a conjugated diene compound as a monomer. Here, the conjugated diene compound means a conjugated-system diene compound.

The conjugated diene compound preferably has 4 to 8 carbon atoms, and examples of such a conjugated diene compound include 1,3-butadiene, isoprene, 1,3-pentadiene, and 2,3-dimethyl-1,3-butadiene. One alone or two or more kinds of conjugated diene compounds can be used here either singly or as combined in two or more kinds. Preferably, the conjugated diene compound as a monomer for the multicomponent copolymer contains at least one selected from 1,3-butadiene and isoprene, from the viewpoint of effectively improving the durability of the rubber composition containing the resultant multicomponent copolymer, and is more preferably composed of one alone selected from 1,3-butadiene and isoprene, even more preferably composed of 1,3-butadiene alone. In other words, the conjugated diene unit in the multicomponent copolymer preferably contains at least one selected from a 1,3-butadiene unit and an isoprene unit, and is more preferably composed of at least alone selected from a 1,3-butadiene unit and an isoprene unit, even more preferably composed of a 1,3-butadiene unit alone. Combining such a conjugated diene unit with the other units makes it possible to readily improve low heat generation properties and also durability of rubber compositions.

The content of the conjugated diene unit in the multicomponent copolymer is preferably 1 mol% or more, more preferably 3 mol% or more, and the upper limit thereof is preferably 50 mol% or less, more preferably 40 mol% or less, even more preferably 30 mol% or less, further more preferably 25 mol% or less, especially more preferably 15 mol% or less. When the content of the conjugated diene unit is 1 mol% or more, a rubber composition excellent in elongation can be obtained, and when the content is 50 mol% or less, weather resistance can improve, and depending on the combination with other units, durability and also low heat generation properties of rubber compositions can readily improve. The content of the conjugated diene unit is preferably within a range of 1 to 50 mol% of the entire multicomponent copolymer, more preferably within a range of 3 to 40 mol%.

The content of the conjugated diene unit in the multicomponent copolymer is substantially the same as the content of the conjugated diene unit in the modified multicomponent copolymer.

The non-conjugated olefin unit is a structural unit derived from a non-conjugated olefin compound as a monomer. Here, the non-conjugated olefin compound means an aliphatic unsaturated hydrocarbon compound having one or more carbon-carbon double bonds.

The non-conjugated olefin compound preferably has 2 to 10 carbon atoms, and specific examples thereof include α-olefins such as ethylene, propylene, 1-butene, 1-pentene, 1-hexene, 1-heptene, and 1-octene; and hetero atom-substituted alkene compounds such as vinyl pivalate, 1-phenylthioethene, and N-vinylpyrrolidone. One alone or two or more kinds of non-conjugated olefin compounds can be used here either singly or as combined in two or more kinds.

The non-conjugated olefin compound as a polymer for the multicomponent copolymer is, from the viewpoint of more improving weather resistance of rubber compositions, preferably an acyclic non-conjugated olefin compound, and the acyclic non-conjugated olefin compound is more preferably an α-olefin, even more preferably an α-olefin containing ethylene, and is especially more preferably composed of ethylene alone. In other words, the non-conjugated olefin unit in the multicomponent copolymer is preferably an acyclic non-conjugated olefin unit, and the acyclic non-conjugated olefin unit is more preferably an α-olefin unit, even more preferably an α-olefin unit containing an ethylene unit, and is especially more preferably composed of an ethylene unit alone. Combining such a non-conjugated olefin unit with the other units makes it possible to readily improve low heat generation properties and also durability of rubber compositions.

The content of the non-conjugated olefin unit in the multicomponent copolymer is preferably 40 mol% or more, more preferably 45 mol% or more, even more preferably 55 mol% or more, further more preferably 60 mol% or more, and the upper limit is preferably 97 mol% or less, more preferably 95 mol% or less, even more preferably 90 mol% or less. When the content of the non-conjugated olefin unit is 40 mol% or more of the entire multicomponent copolymer, the content of the conjugated diene unit or the aromatic vinyl unit can eventually decrease to improve weather resistance of rubber compositions and also fracture characteristics (especially fracture strength (Tb)) thereof, and when the content of the non-conjugated olefin unit is 97 mol% or less, the content of the conjugated diene unit or the aromatic vinyl unit can eventually increase to improve fracture characteristics (especially fracture elongation (Eb)) at a high temperature of rubber compositions and, in addition, depending on combination with the other units, low heat generation properties along with durability of rubber composition can also improve with ease. Preferably, the content of the non-conjugated olefin unit is within a range of 40 to 97 mol% of the entire multicomponent copolymer, more preferably within a range of 45 to 95 mol%, even more preferably within a range of 55 to 90 mol%.

The content of the non-conjugated olefin unit in the multicomponent copolymer is substantially the same as the content of the non-conjugated olefin unit in the modified multicomponent copolymer.

The aromatic vinyl unit is a structural unit derived from an aromatic vinyl compound as a monomer, and improves processability of the multicomponent copolymer. Here, the aromatic vinyl compound means an aromatic compound at least substituted with a vinyl group, and is not included in a conjugated diene compound.

The aromatic vinyl compound preferably has 8 to 10 carbon atoms. Such an aromatic vinyl compound includes styrene, o-methylstyrene, m-methylstyrene, p-methylstyrene, o,p-dimethylstyrene, o-ethylstyrene, m-ethylstyrene, and p-ethylstyrene. One alone or two or more kinds of aromatic vinyl compounds can be used here either singly or as combined at least two kinds. From the viewpoint of improving weather resistance of rubber compositions, the aromatic vinyl compound as a monomer for the multicomponent copolymer preferably contains styrene, and is more preferably composed of styrene alone. In other words, the aromatic vinyl unit in the multicomponent copolymer preferably contains a styrene unit and is more preferably composed of a styrene unit alone. When combined with the other units, such an aromatic vinyl unit can readily improve low heat generation properties or rubber compositions along with durability thereof.

The aromatic ring in the aromatic vinyl unit is not included in the main chain of the multicomponent copolymer so far as it does not bond to an adjacent unit.

The content of the aromatic vinyl unit in the multicomponent copolymer is preferably 2 mol% or more, more preferably 3 mol% or more, and the upper limit is preferably 35 mol% or less, more preferably 30 mol% or less, even more preferably 25 mol% or less. When the content of the aromatic vinyl unit is 2 mol% or more, durability such as fracture characteristics at a high temperature of rubber composition can improve, and when the content of the aromatic vinyl unit is 35 mol% or less, the effect of the conjugated diene unit and the non-conjugated olefin unit can be remarkable and, in addition, depending on combination with the other units, low heat generation properties along with durability of rubber composition can also improve with ease. Preferably, the content of the aromatic vinyl unit is within a range of 2 to 35 mol% of the multicomponent copolymer, more preferably within a range of 3 to 30 mol%, even more preferably within a range of 3 to 25 mol%.

The content of the aromatic vinyl unit in the multicomponent component is substantially the same as the content of the aromatic vinyl unit in the modified multicomponent copolymer.

The number of the kinds of the monomers of the multicomponent copolymer is not specifically limited so far as the multicomponent copolymer contains a conjugated diene unit, a non-conjugated olefin unit and an aromatic vinyl unit. The multicomponent copolymer can contain any other structural units than the conjugated diene unit, the non-conjugated olefin unit and the aromatic vinyl unit, but from the viewpoint of attaining desired effects, the content of the other structural

unit relative to the entire multicomponent copolymer is preferably 30 mol% or less, more preferably 20 mol% or less, even more preferably 10 mol% or less, and especially more preferably, the multicomponent copolymer does not contain other structural units, that is, the content of the other structural unit therein is 0 mol%.

The multicomponent copolymer for use in the present embodiment is, from the viewpoint of improving durability and also low heat generation properties of rubber compositions and bettering abrasion resistance, weather resistance and crystallinity thereof, preferably a polymer produced by polymerizing one kind alone of a conjugated diene compound, one kind alone of a non-conjugated olefin compound and one kind alone of an aromatic vinyl compound as monomers, at least. In other words, the multicomponent copolymer is preferably a multicomponent copolymer containing one kind alone of a conjugated diene unit, one kind alone of a non-conjugated olefin unit and one kind alone of an aromatic vinyl unit, more preferably a ternary copolymer composed of one kind alone of a conjugated diene unit, one kind alone of a non-conjugated olefin unit and one kind alone of an aromatic vinyl unit, even more preferably a ternary copolymer composed of a 1,3-butadiene unit, an ethylene unit and a styrene unit alone. Here, "one kind alone of a conjugated diene unit" includes a conjugated diene unit bonding in a different bonding mode.

In the multicomponent copolymer, preferably, the content of the conjugated diene unit is 1 to 50 mol%, the content of the non-conjugated olefin unit is 40 to 97 mol%, and the content of the aromatic vinyl unit is 2 to 35 mol%. In this case, low heat generation properties and weather resistance along with durability such as fracture characteristics of rubber compositions improve, and in addition, in application to tires, durability such as fracture characteristics of tires is also improved.

The polystyrene-equivalent weight-average molecular weight (Mw) of the multicomponent copolymer is preferably 10,000 to 10,000,000, more preferably 100,000 to 9,000,000, even more preferably 150,000 to 8,000,000. The polystyrene-equivalent number-average molecular weight (Mn) of the multicomponent copolymer is preferably 10,000 to 10,000,000, more preferably 50,000 to 9,000,000, even more preferably 100,000 to 8,000,000. The molecular weight distribution [Mw/Mn (weight-average molecular weight/number-average molecular weight)] of the multicomponent copolymer is preferably 1.00 to 4.00, more preferably 1.50 to 3.50, even more preferably 1.80 to 3.00.

When Mw and Mn of the multicomponent copolymer each fall within the above range, durability such as mechanical strength and fracture characteristics of rubber composition can be improved, and when the upper limit falls within the range, high processability can be maintained. When the molecular weight distribution of the multicomponent copolymer is 4.00 or less, the multicomponent copolymer can be given sufficiently homogeneous physical properties.

Here, the weight-average molecular weight (Mw), the number-average molecular weight (Mn) and the molecular weight distribution (Mw/Mn) can be determined through gel permeation chromatography (GPC) using polystyrene as a standard substance.

The endothermic peak energy of the multicomponent copolymer, as measured with a differential scanning calorimeter (DSC) at 0 to 120°C, is preferably 10 to 150 J/g, more preferably 30 to 120 J/g. When the endothermic peak energy of the multicomponent copolymer is 10 J/g or more, crystallinity of the multicomponent copolymer can be high, wear resistance of rubber compositions can further improve, and durability after crosslinking can further improve. When the endothermic peak energy of the multicomponent copolymer is 150 J/g or less, processability of rubber compositions can improve.

Here, the endothermic peak energy is a value measured according to the method described in the section of Examples.

The melting point of the multicomponent copolymer, as measured with a differential scanning calorimeter (DSC), is preferably 30 to 130°C, more preferably 30 to 110°C, even more preferably 35 to 90°C. When the melting point of the multicomponent copolymer is 30°C or higher, crystallinity of the multicomponent copolymer can be high, wear resistance of rubber compositions can further improve, and durability after crosslinking can further improve. When the melting point of the multicomponent copolymer is 130°C or lower, processability of rubber compositions can improve.

Here, the melting point is a value measured according to the method described in the section of Examples.

The crystallinity degree of the multicomponent copolymer is preferably 0.5 to 50%, more preferably 3 to 45%, even more preferably 5 to 45%. When the crystallinity degree of the multicomponent copolymer is 0.5% or more, the crystallinity derived from the non-conjugated olefin unit can be sufficiently secured to further improve durability such as fracture characteristics of rubber compositions. When the crystallinity degree of the multicomponent copolymer is 50% or less, processability in kneading a rubber composition can improve, and tackiness of a rubber composition blended with the multicomponent copolymer can increase, and therefore, for example, workability in sticking rubber members formed of rubber compositions as well as moldability of rubber products such as tires can also improve.

Here, the crystallinity degree is a value measured according to the method described in the section of Examples.

The glass transition temperature (Tg) of the multicomponent copolymer, as measured with a differential scanning calorimeter (DSC), is preferably 0°C or lower, more preferably -10°C or lower, even more preferably -20°C or lower, and the lower limit is preferably -100°C or higher. When the glass transition temperature of the multicomponent copolymer is 0°C or lower, processability of rubber compositions can improve.

Preferably, the main chain of the multicomponent copolymer is composed of an acyclic structure alone. With

that, wear resistance of rubber compositions can further improve, and durability after crosslinking can further improve. In addition, the multicomponent copolymer of the type can be more readily modified with a functional group containing at least one atom selected from an oxygen atom, a nitrogen atom and a silicon atom.

For confirming as to whether or not the main chain of the multicomponent copolymer has a cyclic structure, NMR is an essential means. Specifically, in the case where a peak derived from a cyclic structure existing in a main chain (for example, for 3-membered to 5-membered structures, a peak appearing at 10 to 20 ppm) is not observed, it means that the main chain of the multicomponent copolymer is composed of an acyclic structure.

The multicomponent copolymer can be produced in a polymerization process using a conjugated diene compound, a non-conjugated olefin compound and an aromatic vinyl compound as monomers, and further optionally, the process can include a coupling step, a washing step and any other steps.

Here, in production of the multicomponent copolymer, preferably, a non-conjugated olefin compound and an aromatic vinyl compound alone are first added to a reactor and polymerized in the presence of a polymerization catalyst, without adding a conjugated diene compound thereto. In particular, in the case where a catalyst composition to be mentioned below is used, a conjugated diene compound is more reactive than a non-conjugated olefin compound and an aromatic vinyl compound, and in the case, therefore, it is often difficult to polymerize a non-conjugated olefin compound and/or an aromatic vinyl compound in the presence of a conjugated diene compound. In addition, in view of the properties of the cocatalyst, it may also be difficult to first polymerize a conjugated diene compound and then polymerize a non-conjugated olefin compound and an aromatic vinyl compound later in a mode of addition polymerization.

As the polymerization method, any methods are usable, including a solution polymerization method, a suspension polymerization method, a liquid-phase bulk polymerization method, an emulsion polymerization method, a vapor-phase polymerization method, and a solid-phase polymerization method. In the case where a solvent is used for polymerization reaction, the solvent may be any one that is inert in polymerization, and examples thereof include toluene, cyclohexane, and normal hexane.

The polymerization step can be carried out in one stage or in multiple stages of 2 or more stages.

The one-stage polymerization step is a step of reacting and polymerizing all the monomers to be polymerized, that is, a conjugated diene compound, a non-conjugated olefin compound, an aromatic vinyl compound, and other monomers, preferably a conjugated diene compound, a non-conjugated olefin compound, and an aromatic vinyl compound all at a time. The multistage polymerization step of two or more stages is a step of first reacting a part or all of one kind or two kinds of monomers to form a polymer (first polymerization stage), and then adding the other monomers or the remaining part of former one or two kinds of monomers and polymerizing them in one or more stages (second polymerization stage to final polymerization stage). In particular, in production for the multicomponent copolymer, the polymerization step is preferably carried out in multiple stages.

In the polymerization step, preferably, the polymerization reaction is carried out in an atmosphere of an inert gas, preferably a nitrogen gas or an argon gas. The polymerization temperature for the polymerization reaction is not specifically limited, but is, for example, preferably within a range of -100°C to 200°C, or can be room temperature or so. The pressure in the polymerization reaction is preferably within a range of 0.1 to 10.0 MPa, for sufficiently taking the conjugated diene compound into the polymerization reaction system. The reaction time for the polymerization reaction is not also specifically limited, and is, for example, preferably within a range of 1 second to 10 days, and can be appropriately selected depending on the kind of the polymerization catalyst and the conditions such as the polymerization temperature.

In the polymerization step with the conjugated diene compound, a polymerization terminator such as methanol, ethanol or isopropanol can be used for terminating the polymerization.

Preferably, the polymerization step is carried out in multiple stages. More preferably, the step includes a first step of mixing a first monomer material containing at least an aromatic vinyl compound and a polymerization catalyst to prepare a polymerization mixture, and a second step of introducing a second monomer material containing at least one selected from a conjugated diene compound, a non-conjugated olefin compound and an aromatic vinyl compound into the polymerization mixture. Further, more preferably, the first monomer material does not contain a conjugated diene compound and the second monomer material contains a conjugated diene compound.

The first monomer material for use in the first step can contain a non-conjugated olefin compound along with an aromatic vinyl compound. The first monomer material can contain an entire amount of the aromatic vinyl compound to be used, or can contain a part thereof alone. A non-conjugated olefin compound is contained at least in any of the first monomer material and the second monomer material.

Preferably, the first step is carried out in an atmosphere of an inert gas, preferably a nitrogen gas or an argon gas, in a reactor. The temperature (reaction temperature) in the first step is not specifically limited, and is, for example, within a range of -100°C to 200°C, or can be room temperature or so. The pressure in the first step is not also specifically limited, but is preferably within a range of 0.1 to 10.0 MPa for sufficiently taking the aromatic vinyl compound into the polymerization reaction system. The time (reaction time) to be spent in the first step can be appropriately selected depending on the kind of the polymerization catalyst and the conditions such as the reaction temperature, and, for

example, when the reaction temperature is 25 to 80°C, the time is preferably within a range of 5 minutes to 500 minutes.

In the first step, for the polymerization method for preparing the polymerization mixture, any method is employable, such as a solution polymerization method, a suspension polymerization method, a liquid-phase bulk polymerization method, an emulsion polymerization method, a vapor-phase polymerization method or a solid-phase polymerization method. In the case where a solvent is used for polymerization reaction, the solvent may be any one that is inert in polymerization, and examples thereof include toluene, cyclohexane, and normal hexane.

The second monomer material for use in the second step is preferably a conjugated diene compound alone, or a conjugated diene compound and a non-conjugated olefin compound or a conjugated diene compound and an aromatic vinyl compound, or a conjugated diene compound, a non-conjugated olefin compound and an aromatic vinyl compound.

In the case where the second monomer material contains at least one selected from a non-conjugated olefin compound and an aromatic vinyl compound in addition to a conjugated diene compound, these monomer materials may be previously mixed with a solvent and then introduced into a polymerization mixture, or each monomer material may be introduced thereinto singly. Each monomer material may be added at the same time, or may be added successively. In the second step, the method of introducing the second monomer material into the polymerization mixture is not specifically limited, but preferably, the second monomer material is continuously added to the polymerization mixture (so-called in metering). Here, in the case where a monomer material that is gaseous under the condition of the polymerization reaction system (for example, ethylene as a non-conjugated olefin compound under the condition of room temperature and normal pressure) is used, the monomer material can be introduced into the polymerization reaction system under a predetermined pressure.

Preferably, the second step is carried out in an atmosphere of an inert gas, preferably a nitrogen gas or an argon gas in a reactor. The temperature (reaction temperature) in the second step is not specifically limited, but is, for example, preferably with a range of -100°C to 200°C, and may be room temperature or so. When the reaction temperature is elevated, the cis-1,4-bond selectivity in the conjugated diene unit may lower. The pressure in the second step is not specifically limited, but for sufficiently taking the monomer such as a conjugated diene compound into the polymerization reaction system, the pressure is preferably within a range of 0.1 to 10.0 MPa. The time (reaction time) to be spent in the second step can be appropriately selected depending on the kind of the polymerization catalyst and the conditions such as the reaction temperature, and is, for example, preferably within a range of 0.1 hours to 10 days.

In the second step, the polymerization reaction can be terminated using a polymerization terminator such as methanol, ethanol or isopropanol.

Preferably, the polymerization process for polymerizing the conjugated diene compound, the non-conjugated olefin compound and the aromatic vinyl compound includes a step of polymerizing the monomers in the presence of at least one catalyst component selected from the components (A) to (F) to be mentioned below. Preferably, in the polymerization step, one or more of the following components (A) to (F) are used, and more preferably, two or more of the following components (A) to (F) are combined and used as a catalyst composition. In the present embodiment, the following components (A) to (F) can be used in the polymerization process, for example, by reference to WO2018/092733.

Component (A): a rare earth element compound, or a reaction product of a rare earth element compound and a Lewis base.
Component (B): an organic metal compound.
Component (C): an aluminoxane.
Component (D): an ionic compound.
Component (E): a halogen compound.
Component (F): a cyclopentadiene skeleton-containing compound selected from a substituted or unsubstituted cyclopentadiene (cyclopentadienyl group-having compound), a substituted or unsubstituted indene (indenyl group-having compound), and a substituted or unsubstituted fluorene (fluorenyl group-having compound).

The coupling step is a step of modifying (coupling reaction) at least a part (for example, the terminal) of a polymer chain of the multicomponent copolymer prepared in the polymerization step.

In the coupling step, preferably, the coupling reaction is carried out when the polymerization reaction has reached 100%.

The coupling agent for use in the coupling reaction is not specifically limited, and can be appropriately selected depending on the intended purpose. Examples of the coupling agent include tin-containing compounds such as bis(maleic acid-1-octadecyl)dioctyltin(IV); isocyanate compounds such as 4,4'-diphenylmethane diisocyanate; and alkoxysilane compounds such as glycidylpropyltrimethoxysilane. One alone or two or more kinds of these may be used either singly or as combined in two or more kinds. Among these, bis(maleic acid-1-octadecyl)dioctyltin(IV) is preferred from the viewpoint of reaction efficiency and little gel formation.

The coupling reaction can increase the number-average molecular weight (Mn).

The washing step is a step of washing the multicomponent copolymer obtained in the polymerization step.
The medium for use for washing is not specifically limited, and can be appropriate selected depending on the intended purpose. Examples of the medium include methanol, ethanol and isopropanol. In the case where a Lewis acid-derived catalyst is used as the polymerization catalyst, in particular, an acid (e.g., hydrochloric acid, sulfuric acid, nitric acid) can be added to the solvent. The amount of the acid to be added is preferably 15 mol% or less relative to the solvent. When the amount is 15 mol% or less, negative influences to be caused by the acid remaining in the multicomponent copolymer, on reaction during kneading and vulcanization can be prevented.
The washing step can favorably lower the amount of the residual catalyst in the multicomponent copolymer.

(Modification)

The modified multicomponent copolymer of the present embodiment is one produced by modifying a polymer chain of the above-mentioned multicomponent copolymer with a functional group containing at least one atom selected from an oxygen atom, a nitrogen atom and a silicon atom. In the modified multicomponent copolymer of the present embodiment, the oxygen atom, the nitrogen atom and the silicon atom have a high affinity for a filler such as carbon black or silica contained in rubber compositions, and therefore, by modifying the multicomponent copolymer with a functional group containing these atoms, the affinity between the multicomponent copolymer and the filler can enhance, and the multicomponent copolymer can therefore attain the effect of expressing high durability for rubber compositions and also the effect of expressing low heat generation properties.
Modification of a polymer chain of the multicomponent copolymer with a functional group containing at least one atom selected from an oxygen atom, a nitrogen atom and a silicon atom can be carried out using a modifying agent. In modifying a polymer chain of the multicomponent copolymer, the site of the polymer chain to be modified is not specifically limited, and any of a terminal and a main chain except terminals can be modified, but from the viewpoint of improving durability and low heat generation properties of rubber compositions, a terminal is preferably modified, and from the viewpoint of adhesiveness to other members, a main chain is preferably modified. In the present embodiment, which of a main chain or a terminal is to be modified can be selected depending on the desired situation.
The modifying agent for use in the present embodiment is preferably at least one compound selected from the following compounds (a) to (1).

(Compound (a))

The compound (a) is a compound represented by the following general formula (1).

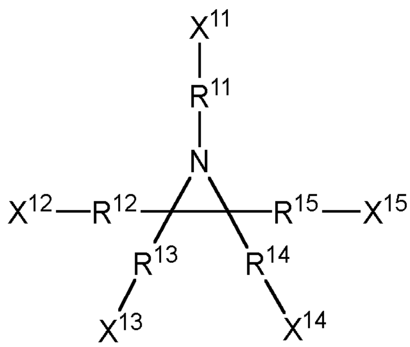

(1)

In the general formula (1), $X^{11}$ to $X^{15}$ each independently represent a hydrogen atom, or a monovalent functional group containing at least one selected from a halogen atom, a carbonyl group, a thiocarbonyl group, an isocyanate group, a thioisocyanate group, an epoxy group, a thioepoxy group, a halogenosilyl group, a hydrocarbyloxysilyl group and a sulfonyloxy group, but not containing an active proton and an onium salt, and at least one of $X^{11}$ to $X^{15}$ is not a hydrogen atom.
$R^{11}$ to $R^{15}$ each independently represent a single bond, or a divalent hydrocarbon group having 1 to 18 carbon atoms. Typically, examples of the divalent hydrocarbon group of $R^{11}$ to $R^{15}$ include an alkylene group having 1 to 18 carbon atoms, an alkenylene group having 2 to 18 carbon atoms, an arylene group having 6 to 18 carbon atoms, and an aralkylene group having 7 to 18 carbon atoms. Among these, an alkylene group having 1 to 18 carbon atoms is preferred, and an alkylene group having 1 to 10 carbon atoms is more preferred. The alkylene group and the alkenylene group may be any of linear, branched and cyclic ones, and are preferably linear. Examples of linear alkylene group include a methylene group, an ethylene group, a trimethylene group, a tetramethylene group, a pentamethylene group, a hexamethylene group, an octamethylene group and a decamethylene group.

Plural aziridine rings may bond via any of $X^{11}$ to $X^{15}$ and $R^{11}$ to $R^{15}$. In the general formula (1), preferably, $X^{11}$ being a hydrogen atom and $R^{11}$ being a single bond are not satisfied simultaneously.

Typically, examples of the modifying agent represented by the general formula (1) include 1-acetylaziridine, 1-propionylaziridine, 1-butylaziridine, 1-isobutylaziridine, 1-valerylaziridine, 1-isovalerylaziridine, 1-pivaloylaziridine, 1-acetyl-2-methylaziridine, 2-methyl-1-propionylaziridine, 1-butyl-2-methylaziridine, 2-methyl-1-isobutylaziridine, 2-methyl-1-valerylaziridine, 1-isovaleryl-2-methylaziridine, 2-methyl-1-pivaloylaziridine, ethyl 3-(1-aziridinyl)propionate, propyl 3-(1-aziridinyl)propionate, butyl 3-(1-aziridinyl)propionate, ethylene glycol bis[3-(1-aziridinyl)propionate], trimethylolpropane tris[3-(1-aziridinyl)propionate], ethyl 3-(2-methyl-1-aziridinyl)propionate, propyl 3-(2-methyl-1-aziridinyl)propionate, butyl 3-(2-methyl-1-aziridinyl)propionate, ethylene glycol bis[3-(2-methyl-1-aziridinyl)propionate], trimethylolpropane tris[3-(2-methyl-1-aziridinyl)propionate], neopentyl glycol bis[3-(1-aziridinyl)propionate], neopentyl glycol bis[3-(2-methyl-1-aziridinyl)propionate], di(1-aziridinylcarbonyl)methane, 1,2-di(1-aziridinylcarbonyl)ethane, 1,3-di(1-aziridinylcarbonyl)propane, ,4-di(l-aziridinylcarbonyl)butane, 1,5-di(1-aziridinylcarbonyl)pentane, di(2-methyl-1-aziridinylcarbonyl)methane, 1,2-di(2-methyl-1-aziridinylcarbonyl)ethane, 1,3-di(2-methyl-1-aziridinylcarbonyl)propane, and 1,4-di(2-methyl-1-aziridinylcarbonyl)butane.

As the compound (a), one alone or two or more kinds of the above-mentioned compounds can be used either singly or as combined in two or more kinds.

(Compound (b))

The compound (b) is a halogenated organic metal compound, a halogenated metal compound or an organic metal compound represented by the following general formulae (2-1) to (2-5).

$$R^{21}_{n_{21}}—M^{21}—Z^{21}_{4-n_{21}} \quad (2\text{-}1)$$

$$M^{21}—Z^{21}_{4} \quad (2\text{-}2)$$

$$M^{21}—Z^{21}_{3} \quad (2\text{-}3)$$

$$R^{22}_{n_{21}}—M^{21}\left(R^{23}—COOR^{24}\right)_{4-n_{21}} \quad (2\text{-}4)$$

$$R^{22}_{n_{21}}—M^{21}\left(R^{23}—COR^{24}\right)_{4-n_{21}} \quad (2\text{-}5)$$

In the general formulae (2-1) to (2-5), $R^{21}$ to $R^{23}$ each independently represent a hydrocarbon group having 1 to 20 carbon atoms, $R^{24}$ represents a hydrocarbon group having 1 to 20 carbon atoms, and may contain a carbonyl group or an ester group in the side chain, $M^{21}$ represents a tin atom, a silicon atom, a germanium atom or a phosphorus atom, $Z^{21}$ represents a halogen atom, and $n_{21}$ represents an integer of 0 to 3.

Typically, examples of the halogenated organic metal compound and the halogenated metal compound represented by the general formulae (2-1) to (2-3) where $M^{21}$ is a tin atom include triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride, and tin tetrachloride.

Typical examples of the compounds where $M^{21}$ is a silicon atom include triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyltridiclorosilane, octyltrichlorosilane, butyltrichlorosilane, methyltrichlorosilane, and silicon tetrachloride.

Typical examples of the compounds where $M^{21}$ is a germanium atom include triphenylgermanium chloride, dibutylgermanium dichloride, diphenylgermanium dichloride, butylgermanium trichloride, and germanium tetrachloride. Further, examples of the compound of the formula (V) where M' is a phosphorus atom for the component (b) include phosphorus trichloride.

The compound (b) includes an organic metal compound represented by the general formula (2-4) that contains an ester group in the molecule, and an organic metal compound represented by the general formula (2-5) that contains a carbonyl group in the molecule.

As the compound (b), one alone or two or more kinds of the above-mentioned compounds can be used either

singly or as combined in two or more kinds.

(Compound (c))

The compound (c) is a hetero-cumulene compound, and is a compound containing a $Y^{01}=C=Y^{02}$ bond (where $Y^{01}$ represents a carbon atom, an oxygen atom, a nitrogen atom or a sulfur atom, and $Y^{02}$ represents an oxygen atom, a nitrogen atom or a sulfur atom) in the molecule.

The compound (c) where $Y^{01}$ is a carbon atom and $Y^{02}$ is an oxygen atom is a ketene compound, that where $Y^{01}$ is a carbon atom and $Y^{02}$ is a sulfur atom is a thioketene compound, that where $Y^{01}$ is a nitrogen atom and $Y^{02}$ is an oxygen atom is an isocyanate compound, that where $Y^{01}$ is a nitrogen atom and $Y^{02}$ is a sulfur atom is a thioisocyanate compound, that where $Y^{01}$ and $Y^{02}$ are both nitrogen atoms is a carbodiimide compound, that where $Y^{01}$ and $Y^{02}$ are both oxygen atoms is carbon dioxide, that where $Y^{01}$ is an oxygen atom and and $Y^{02}$ is a sulfur atom is carbonyl sulfide, and that where $Y^{01}$ and $Y^{02}$ are both sulfur atoms is carbon disulfide. So far as the compound (c) has a function of a modifying agent, $Y^{01}$ and $Y^{02}$ are not limited to the above-mentioned combinations.

Typically, examples of the ketene compound include ethyl ketene, butyl ketene, phenyl ketene and toluyl ketene. Typical examples of the thioketene compound include ethylene thioketene, butyl thioketene, phenyl thioketene, and toluyl thioketene. Typical examples of the isocyanate compound include phenyl isocyanate, 2,4-tolylene diisocyanate, 2,6-tolylene diisocyanate, diphenylmethane diisocyanate, polymeric-type diphenylmethane diisocyanate, and hexamethylene diisocyanate. Typical examples of the thioisocyanate compound include phenyl thioisocyanate, 2,4-tolylene dithioisocyanate, and hexamethylene dithioisocyanate. Typical examples of the carbodiimide compound include N,N'-diphenylcarbodiimide, and N,N'-ethylcarbodiimide.

As the compound (c), one alone or two or more kinds of the above-mentioned compounds can be used either singly or as combined in two or more kinds.

(Compound (d))

The compound (d) is a 3-membered heterocyclic compound having a bond represented by the following general formula (3).

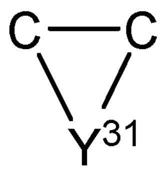

(3)

In the general formula (3), $Y^{31}$ represents an oxygen atom or a sulfur atom.

The compound (d) where $Y^{31}$ is an oxygen atom is an epoxy compound, and that where $Y^{31}$ is a sulfur atom is a thiirane compound. Here, typical examples of the epoxy compound include ethylene oxide, propylene oxide, cyclohexene oxide, styrene oxide, epoxidated soybean oil, and epoxidated natural rubber. Typical examples of the thiirane compound include thiirane, methylthiirane, and phenylthiirane.

As the compound (d), one alone or two or more kinds of the above-mentioned compounds can be used either singly or as combined in two or more kinds.

(Compound (e))

The compound (e) is a halogenated isocyano compound. One example of the halogenated isocyano compound is a compound containing a >N=C-$X^{01}$ bond ($X^{01}$ represents a halogen atom).

Typical examples of the halogenated isocyano compound include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichloro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, and 2-chlorobenzoxazole.

As the compound (e), one alone or two or more kinds of the above-mentioned compounds can be used either singly or as combined in two or more kinds.

(Compound (f))

The compound (f) is a carboxylic acid, an acid halide compound, an ester compound, a carbonate ester or an acid anhydride represented by the following general formulae (4-1) to (4-6).

$$R^{41}-(COOH)_{n_{41}} \quad (4\text{-}1)$$

$$R^{42}-(COZ^{41})_{n_{41}} \quad (4\text{-}2)$$

$$R^{43}-(COOR^{44}) \quad (4\text{-}3)$$

$$R^{45}\text{-}OCOO\text{-}R^{46} \quad (4\text{-}4)$$

$$R^{47}-(COOCOR^{48})_{n_{41}} \quad (4\text{-}5)$$

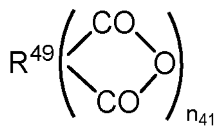

(4-6)

In the general formulae (4-1) to (4-6), $R^{41}$ to $R^{49}$ each independently represent a hydrocarbon group having 1 to 50 carbon atoms, $Z^{41}$ represents a halogen atom, and $n_{41}$ represents an integer of 1 to 5.

Typical examples of the carboxylic acid represented by the general formula (4-1) include acetic acid, stearic acid, adipic acid, maleic acid, benzoic acid, acrylic acid, methacrylic acid, phthalic acid, isophthalic acid, terephthalic acid, trimellitic acid, pyromellitic acid, mellitic acid, and whole or partial hydrolyzates of polymethacrylate compounds or polyacrylic acid compounds.

Typical examples of the acid halide compound represented by the general formula (4-2) include acetic acid chloride, propionic acid chloride, butanoic acid chloride, isobutanoic acid chloride, octanoic acid chloride, acrylic acid chloride, benzoic acid chloride, stearic acid chloride, phthalic acid chloride, maleic acid chloride, oxaphosphoric acid chloride, acetyl iodide, benzoyl iodide, acetyl fluoride, and benzoyl fluoride.

Typically, examples of the ester compound represented by the general formula (4-3) include ethyl acetate, ethyl stearate, diethyl adipate, diethyl maleate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, polymethyl methacrylate, polyethyl acrylate, and polyisobutyl acrylate; and examples of the carbonate compound represented by the general formula (4-4) include dimethyl carbonate, diethyl carbonate, dipropyl carbonate, dihexyl carbonate, and diphenyl carbonate.

Typical examples of the acid anhydride include intermolecular acid anhydrides represented by the general formula (4-5) such as acetic anhydride, propionic anhydride, isobutyric anhydride, isovaleric anhydride, heptanoic anhydride, benzoic anhydride, and cinnamic anhydride, and also acid anhydrides represented by the general formula (4-6) such as typically succinic anhydride, methylsuccinic anhydride, maleic anhydride, glutaric anhydride, citraconic anhydride, phthalic anhydride, and styrene-maleic anhydride copolymer.

As the compound (f), one alone or two or more kinds of the above-mentioned compounds can be used either singly or as combined in two or more kinds.

The compounds mentioned above as the compound (f) can contain an aprotic polar group such as an ether group or a tertiary amino group, within a range not detracting from the object of the present invention. The compound (f) can also contain a compound having a free alcohol group or phenol group as an impurity.

As the compound (f), one alone or two or more kinds of the above-mentioned compounds can be used either singly or as combined in two or more kinds.

(Compound (g))

The compound (g) is a carboxylic acid metal salt represented by the following general formulae (5-1) to (5-3).

$$R^{51}_{n_{51}}-M^{51}-(OCOR^{52})_{4-n_{51}} \quad (5\text{-}1)$$

$$R^{53}_{n_{51}}-M^{51}\left(OCO-R^{54}-COOR^{55}\right)_{4-n_{51}} \quad (5-2)$$

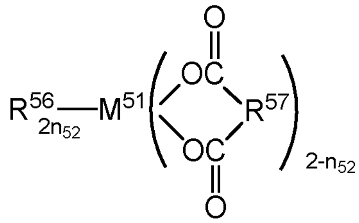

(5-3)

In the general formulae (5-1) to (5-3), $R^{51}$ to $R^{57}$ each independently represent a hydrocarbon group having 1 to 20 carbon atoms, $M^{51}$ represents a tin atom, a silicon atom or a germanium atom, $n_{51}$ represents an integer of 0 to 3, and $n_{52}$ represents an integer of 0 or 1.

Typically, examples of the compound (g) represented by the general formula (5-1) include triphenyltin laurate, triphenyltin-2-ethylhexanoate, triphenyltin naphthenate, triphenyltin acetate, triphenyltin acrylate, tri-n-butyltin laurate, tri-n-butyltin-2-ethylhexanoate, tri-n-butyltin naphthenate, tri-n-butyltin acetate, tri-n-butyltin acrylate, tri-t-butyltin laurate, tri-t-butyltin-2-ethylhexanoate, tri-t-butyltin naphthenate, tri-t-butyltin acetate, tri-t-butyltin acrylate, triisobutyltin laurate, triisobutyltin-2-ethylhexanoate, triisobutyltin naphthenate, triisobutyltin acetate, triisobutyltin acrylate, triisopropyltin laurate, triisopropyltin-2-ethylhexanoate, triisopropyltin naphthenate, triisopropyltin acetate, triisopropyltin acrylate, trihexyltin laurate, trihexyltin-2-ethylhexanoate, trihexyltin acetate, trihexyltin acrylate, trioctyltin laurate, trioctyltin-2-ethylhexanoate, trioctyltin naphthenate, trioctyltin acetate, trioctyltin acrylate, tri-2-ethylhexyltin laurate, tri-2-ethylhexyltin-2-ethylhexanoate, tri-2-ethylhexyltin naphthenate, tri-2-ethylhexyltin acetate, tri-2-ethylhexyltin acrylate, tristearyltin laurate, tristearyltin-2-ethylhexanoate, tristearyltin naphthenate, tristearyltin acetate, tristearyltin acrylate, tribenzyltin laurate, tribenzyltin-2-ethylhexanoate, tribenzyltin naphthenate, tribenzyltin acetate, tribenzyltin acrylate, diphenyltin dilaurate, diphenyltin-2-ethylhexanoate, diphenyltin distearate, diphenyltin dinaphthenate, diphenyltin diacetate, diphenyltin diacrylate, di-n-butyltin dilaurate, di-n-butyltin di-2-ethylhexanoate, di-n-butyltin distearate, di-n-butyltin dinaphthenate, di-n-butyltin diacetate, di-n-butyltin diacrylate, di-t-butyltin dilaurate, di-t-butyltin di-2-ethylhexanoate, di-t-butyltin distearate, di-t-butyltin dinaphthenate, di-t-butyltin diacetate, di-t-butyltin diacrylate, diisobutyltin dilaurate, diisobutyltin di-2-ethylhexanoate, diisobutyltin distearate, diisobutyltin dinaphthenate, diisobutyltin diacetate, diisobutyltin diacrylate, diisopropyltin dilaurate, diisopropyltin-2-ethylhexanoate, diisopropyltin distearate, diisopropyltin dinaphthenate, diisopropyltin diacetate, diisopropyltin diacrylate, dihexyltin dilaurate, dihexyltin di-2-ethylhexanoate, dihexyltin distearate, dihexyltin dinaphthenate, dihexyltin diacetate, dihexyltin diacrylate, di-2-ethylhexyltin dilaurate, di-2-ethylhexyltin-2-ethylhexanoate, di-2-ethylhexyltin distearate, di-2-ethylhexyltin dinaphthenate, di-2-ethylhexyltin diacetate, di-2-ethylhexyltin diacrylate, dioctyltin dilaurate, dioctyltin di-2-ethylhexanoate, dioctyltin distearate, dioctyltin dinaphthenate, dioctyltin diacetate, dioctyltin diacrylate, distearyltin dilaurate, distearyltin di-2-ethylhexanoate, distearyltin distearate, distearyltin dinaphthenate, distearyltin diacetate, distearyltin diacrylate, dibenzyltin dilaurate, dibenzyltin di-2-ethylhexanoate, dibenzyltin distearate, dibenzyltin dinaphthenate, dibenzyltin diacetate, dibenzyltin diacrylate, phenyltin trilaurate, phenyltin tri-2-ethylhexanoate, phenyltin trinaphthenate, phenyltin triacetate, phenyltin triacrylate, n-butyltin trilaurate, n-butyltin tri-2-ethylhexanoate, n-butyltin trinaphthenate, n-butyltin triacetate, n-butyltin triacrylate, t-butyltin trilaurate, t-butyltin tri-2-ethylhexanoate, t-butyltin trinaphthenate, t-butyltin triacetate, t-butyltin triacrylate, isobutyltin trilaurate, isobutyltin tri-2-ethylhexanoate, isobutyltin trinaphthenate, isobutyltin triacetate, isobutyltin triacrylate, isopropyltin trilaurate, isopropyltin tri-2-ethylhexanoate, isopropyltin trinaphthenate, isopropyltin triacetate, isopropyltin triacrylate, hexyltin trilaurate, hexyltin tri-2-ethylhexanoate, hexyltin trinaphthenate, hexyltin triacetate, hexyltin triacrylate, octyltin trilaurate, octyltin tri-2-ethylhexanoate, octyltin trinaphthenate, octyltin triacetate, octyltin triacrylate, 2-ethylhexyltin trilaurate, 2-ethylhexyltin tri-2-ethylhexanoate, 2-ethylhexyltin trinaphthenate, 2-ethylhexyltin triacetate, 2-ethylhexyltin triacrylate, stearyltin trilaurate, stearyltin tri-2-ethylhexanoate, stearyltin trinaphthenate, stearyltin triacetate, stearyltin triacrylate, benzyltin trilaurate, benzyltin tri-2-ethylhexanoate, benzyltin trinaphthenate, benzyltin triacetate, and benzyltin triacrylate.

Typically, examples of the compound (g) represented by the general formula (5-2) include diphenyltin bismethylmaleate, diphenyltin bis-2-ethylhexanoate, diphenyltin bisoctylmaleate, diphenyltin bisoctylmaleate, diphenyltin bisbenzylmaleate, di-n-butyltin bismethylmaleate, di-n-butyltin bis-2-ethylhexanoate, di-n-butyltin bisoctylmaleate, di-n-butyltin bisbenzylmaleate, dit-butyltin bismethylmaleate, di-t-butyltin bis-2-ethylhexanoate, di-t-butyltin bisoctylmaleate, di-t-butyltin bisbenzylmaleate, diisobutyltin bismethylmaleate, diisobutyltin bis-2-ethylhexanoate, diisobutyltin bisoctylmaleate, diisobutyltin bisbenzylmaleate, diisopropyltin bismethylmaleate, diisopropyltin bis-2-ethylhexanoate, diisopropyltin bisoctylmaleate, diisopropyltin bisbenzylmaleate, dihexyltin bismethylmaleate, dihexyltin bis-2-ethylhexanoate, dihexyltin bisoctylmaleate, dihexyltin bisbenzylmaleate, di-2-ethylhexyltin bismethylmaleate, di-2-ethylhexyltin bis-2-ethylhexanoate, di-2-ethylhexyltin bisoctylmaleate, di-2-ethylhexyltin bisbenzylmaleate, dioctyltin bismethylmaleate, dioctyltin bis-2-ethylhexanoate, dioctyltin bisoctylmaleate, dioctyltin bisbenzylmaleate, distearyltin bismethylmaleate, distearyltin bis-2-ethylhexanoate, distearyltin bisoctylmaleate, distearyltin bisbenzylmaleate, dibenzyltin bismethylmaleate, dibenzyltin bis-2-ethyhexanoate, dibenzyltin bisoctylmaleate, dibenzyltin bisbenzylmaleate, diphenyltin bismethyladipate, diphenyltin bis-2-ethyhexanoate, diphenyltin bisoctyladipate, diphenyltin bisbenzyladipate, di-n-butyltin bismethyladipate, di-n-butyltin bis-2-ethylhexanoate, di-n-butyltin bisoctyladipate, di-n-butyltin bisbenzyladipate, di-t-butyltin bismethyladipate, di-t-butyltin bis-2-ethylhexanoate, di-t-butyltin bisoctyladipate, di-t-butyltin bisbenzyladipate, diisobutyltin bismethyladipate, diisobutyltin bis-2-ethylhexanoate, diisobutyltin bisoctyladipate, diisobutyltin bisbenzyladipate, diisopropyltin bismethyladipate, diisopropyltin bis-2-ethylhexanoate, diisopropyltin bisoctyladipate, diisopropyltin bisbenzyladipate, dihexyltin bismethyladipate, dihexyltin bis-2-ethylhexanoate, dihexyltin bismethyladipate, dihexyltin bisbenzyladipate, di-2-ethylhexyltin bismethyladipate, di-2-ethylhexyltin bis-2-ethylhexanoate, di-2-ethylhexyltin bisoctyladipate, di-2-ethylhexyltin bisbenzyladipate, dioctyltin bismethyladipate, dioctyltin bis-2-ethylhexanoate, dioctyltin bisoctyladipate, dioctyltin bisbenzyladipate, distearyltin bismethyladipate, distearyltin bis-2-ethylhexanoate, distearyltin bisoctyladipate, distearyltin bisbenzyladipate, dibenzyltin bismethyladipate, dibenzyltin bis-2-ethylhexanoate, dibenzyltin bisoctyladipate, and dibenzyltin bisbenzyladipate.

Typical examples of the compound (g) represented by the general formula (5-3) include diphenyltin maleate, di-n-butyltin maleate, di-t-butyltin maleate, diisobutyltin maleate, diisopropyltin maleate, dihexyltin maleate, di-2-ethylhexyltin maleate, dioctyltin maleate, distearyltin maleate, dibenzyltin maleate, diphenyltin adipate, di-n-butyltin adipate, di-t-butyltin adipate, diisobutyltin adipate, diisopropyltin adipate, dihexyltin diacetate, di-2-ethylhexyltin adipate, dioctyltin adipate, distearyltin adipate and dibenzyltin adipate.

As the compound (g), one alone or two or more kinds of the above-mentioned compounds can be used either singly or as combined in two or more kinds.

(Compound (h))

The compound (h) is an N-substituted aminoketone, an N-substituted aminothioketone, an N-substituted aminoaldehyde, an N-substituted aminothioaldehyde, or a compound having a -C-(=$M^{01}$)-N< bond ($M^{01}$ represents an oxygen atom or a sulfur atom) in the molecule.

Typically, examples of the compound (h) include N-substituted aminoketones and corresponding N-aminothioketones, such as 4-dimethylaminoacetophenone, 4-diethylaminoacetopheone, 1,3-bis(diphenylamino)-2-propanone, 1,7-bis(methylethylamino)-4-heptanone, 4-dimethylaminobenzophenone, 4-diethylaminobenzophenone, 4-di-t-butylaminobenzophenone, 4-diphenylaminobenzophenone, 4,4'-bis(dimethylamino)benzophenone, 4,4'-bis(diethylamino)benzophenone, and 4,4'-bis(diphenylamino)benzophenone; N-substituted aminoaldehydes and corresponding N-substituted aminothioaldehydes, such as 4-dimethylaminobenzaldehyde, 4-diphenylaminobenzaldehyde, and 4-divinylaminobenzaldehyde; N-substituted lactams and corresponding N-substituted thiolactams, such as N-methyl-β-propiolactam, N-phenyl-β-propiolactam, N-methyl-2-pyrrolidone, N-phenyl-2-pyrrolidone, N-t-butyl-2-pyrrolidone, N-phenyl-5-methyl-2-pyrrolidone, N-methyl-2-piperidone, N-phenyl-2-piperidone, N-methyl-ε-caprolactam, N-phenyl-ε-caprolactam, N-methyl-ω-caprolactam, N-phenyl-ω-caprolactam, N-methyl-ω-laurolactam, and N-vinyl-ω-laurolactam; compound having a -C-(=$M^{01}$)-N< bond ($M^{01}$ represents an oxygen atom or a sulfur atom) in the molecule of N-substituted cyclic ureas and corresponding N-substituted cyclic thioureas, such as 1,3-dimethylethylene urea, 1,3-divinylethylene urea, 1,3-diethyl-2-imidazolidinone, 1-methyl-3-ethyl-2-imidazolidinone, and 1,3-dimethyl-2-imidazolidinone.

As the compound (h), one alone or two or more kinds of the above-mentioned compounds can be used either singly or as combined in two or more kinds.

(Compound (i))

The compound (i) is a compound having an N=C- bond.

The compound (i) is not specifically limited so far as it has an N=C- bond, and examples thereof include organic cyano compounds represented by a general formula R-CN, such as 2-cyanopyridine, 3-cyanopyridine, and acrylonitrile.

As the compound (i), one alone or two or more kinds of the above-mentioned compounds can be used either singly or as combined in two or more kinds.

(Compound (j))

The compound (j) is a compound having a phosphoric acid residue represented by the following general formula (6).

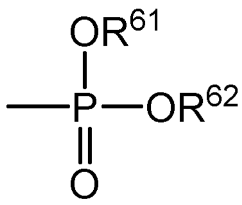

(6)

In the general formula (6), $R^{61}$ and $R^{62}$ each independently represent an alkyl group having 1 to 20 carbon atoms, a monovalent alicyclic hydrocarbon group having 3 to 20 carbon atoms, a monovalent aromatic hydrocarbon group having 6 to 20 carbon atoms, or a hydrogen atom.

Typically, examples of the phosphoric acid residue represented by the general formula (6) include phosphoric acid residues represented by the following general formula (7).

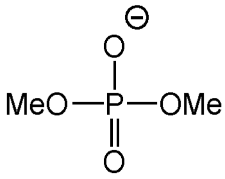

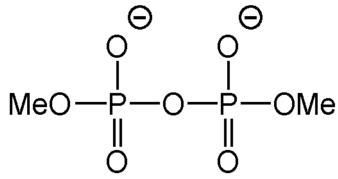

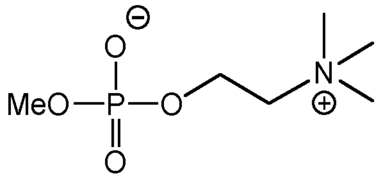

(7)

As the compound (j), one alone or two or more kinds of the above-mentioned compounds can be used either singly or as combined in two or more kinds.

(Compound (k))

The compound (k) is a electrophilic compound containing at least one atom selected from an oxygen atom, a nitrogen atom and a silicon atom. Examples of the electrophilic compound include ketones, aldehydes and epoxides, such as typically benzaldehyde, benzophenone, 4,4'-bis(diethylamino)benzophenone, 3-glycidoxypropyltrimethoxysilane, and allyl glycidyl ether.

As the compound (k), one alone or two or more kinds of the above-mentioned compounds can be used either singly or as combined in two or more kinds.

(Compound (1))

The compound (1) is a vinyl compound having a vinyl group and containing at least one atom selected from an oxygen atom, a nitrogen atom and a silicon atom. Preferred examples of the vinyl compound include vinyl phosphate, vinyl acetate ether, vinyl pivalate, vinyltrimethylsilane, and triethoxyvinylsilane.

As the compound (1), one alone or two or more kinds of the above-mentioned compounds can be used either singly or as combined in two or more kinds.

In the present embodiment, one alone or two or more kinds of the above-mentioned compounds (a) to (l) can be used either singly or as combined in two or more kinds.

In the case where the compounds (a) to (l) are used, any other modifying agent not containing an oxygen atom, a nitrogen atom and a silicon atom, for example, vinyl compounds such as propylene, 1-butene, 1-hexene, styrene or vinylnaphthalene can also be used.

In the case where a terminal of a polymer chain is modified, preferably, a modifying agent of the above-mentioned compounds (a) to (l) is used, and among them, an organic cyano compound of the compound (i), a compound having an N≡C-bond is preferred, and a compound having a pyridine skeleton and an N≡C- bond, such as 2-cyanopyridine and 3-cyanopyridine, is more preferred. Among the above-mentioned compounds, electrophilic compounds such as typically ketones, aldehydes and epoxides are also preferred, and a compound having a glycidyl group such as 3-glycidoxypropyltrimethoxysilane and allyl glycidyl ether is more preferred.

In the present embodiment where a terminal of a polymer chain is modified, the modification reaction can be carried out in any mode of solution reaction or solid-phase reaction, but solution reaction is preferred in which the solution may contain an unreacted monomer used in polymerization to give a multicomponent copolymer. The modification reaction mode using the modifying agent is not specifically limited, and may be a batch mode using a batch reactor, or may also be a continuous mode using a multistage continuous reactor or an in-line mixer. Preferably, before the modification reaction and after the polymerization reaction, various operations necessary for polymer isolation may be carried out, such as solvent removal treatment, water treatment or heat treatment.

The temperature for modification reaction is, for example, preferably within a range of 20°C (room temperature) to 100°C. When the temperature is 20°C or higher, the viscosity of the polymer can be kept good, and when the temperature is 100°C or lower, the polymerization active terminal may be hardly deactivated. The time for modification reaction is preferably 0.5 minutes to 2 hours, more preferably 3 minutes to 1 hour.

The amount of the modifying agent to be used for the multicomponent polymer may be appropriately selected depending on the degree of modification of the modified multicomponent polymer to be obtained, and is, for example, as a molar ratio, 0.1 to 100 or so, preferably 0.5 to 80, more preferably 1.0 to 50. When the amount of the modifying agent to be used falls within the range, modification reaction goes on good without forming a toluene-insoluble fraction (gel) to enhance low heat generation properties.

In the case where a chain in the main chain of a polymer chain is modified, a modifying agent of the above-mentioned compounds (a) to (l), or a modifying agent not containing an oxygen atom, a nitrogen atom and a silicon atom can be used, and any other modifying agent than these modifying agents is also preferably usable. Such an other modifying agent includes an unsaturated monomer having at least one carbon-carbon double bond in the molecule, and above all, a polar group-containing unsaturated monomer having at least one polar group and at least one carbon-carbon double bond in the molecule is preferred.

Preferred examples of the polar group include an amino group, an imino group, a nitrile group, an ammonium group, an imide group, an amide group, a hydrazo group, an azo group, a diazo group, a hydroxy group, a carboxy group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group. One alone or two or more kinds of these polar group-containing unsaturated monomers can be used either singly or as combined in two or more kinds.

Examples of the amino group-containing monomer include a polymerizable monomer containing at least one amino group selected from primary, secondary and tertiary amino groups in one molecule. Among the amino group-having polymerizable monomers, a tertiary amino group-containing monomer such as dialkylaminoalkyl (meth)acrylate is especially preferred. One alone or two or more kinds of these amino group-containing monomers can be used either singly or as combined in two or more kinds.

Typically, examples of the primary amino group-containing monomer include acrylamide, methacrylamide, 4-vinylaniline, aminomethyl (meth)acrylate, aminoethyl (meth)acrylate, aminopropyl (meth)acrylate, and aminobutyl (meth)acrylate.

Typical examples of the secondary amino group-containing monomer include anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, and α-carboxy-β-carboxy-β-phenyl-p-anilinostyrene; anilinophenylbutadienes such as 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, and 2-anilinophenyl-3-chloro-1,3-butadiene; and N-mono-substituted (meth)acrylamides such as N-methyl(meth)acrylamide, N-ethyl(meth)acrylamide, and N-methylolacrylamide, N-(4-anilinophenyl)methacrylamide.

Examples of the tertiary amino group-containing monomer include N,N-disubstituted aminoalkyl (meth)acrylates and N,N-di-substituted aminoalkyl(meth)acrylamides.

Typical examples of the N,N-di-substituted aminoalkyl (meth)acrylate include acrylates or methacrylates such as N,N-dimethylaminomethyl (meth)acrylate, N,N-dimethylaminoethyl (meth)acrylate, N,-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate, and acryloylmorpholine.

Typical examples of the N,N-disubstituted aminoalkyl (meth)acrylamide include acrylamide compounds or methacrylamide compounds such as N,N-dimethylaminomethyl(meth)acrylamide, N,N-dimethylaminoethyl(meth)acrylamide, N,N-dimethylaminopropyl(meth)acrylamide, N,N-dimethylaminobutyl(meth)acrylamide, N,N-diethylaminoethyl(meth)acrylamide, N,-diethylaminopropyl(meth)acrylamide, N,N-diethylaminobutyl(meth)acrylamide, N-methyl-N-ethylaminoethyl (meth)acrylamide, N,N-dipropylaminoethyl(meth)acrylamide, N,N-dibutylaminoethyl(meth)acrylamide, N,N-dibutylaminopropyl(meth)acrylamide, N,N-dibutylaminobutyl(meth)acrylamide, N,N-dihexylaminoethyl(meth)acrylamide, N,N-dihexylaminopropyl(meth)acrylamide, and N,N-dioctylaminopropyl(meth)acrylamide.

Typical examples of the nitrile group-containing monomer include (meth)acrylonitrile, and vinylidene cyanide. One alone or two or more kinds of these nitrile group-containing monomers can be used either singly or as combined in two or more kinds.

The hydroxy group-containing monomer includes a polymerizable monomer having at least one of primary, secondary and tertiary hydroxy groups in one molecule. Such a monomer includes a hydroxy group-containing monomer.

Typically, examples of the hydroxy group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; mono(meth)acrylates of polyalkylene glycols (where the number of the alkylene glycol units is, for example, 2 to 23) such as polyethylene glycol, polypropylene glycol; hydroxy group-containing unsaturated amides such as N-hydroxymethyl(meth)acrylamide, N-(2-hydroxyethyl)(meth)acrylamide, and N,N-bis(2-hydroxymethyl)(meth)acrylamide; and hydroxy group-containing vinyl-aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, and p-vinylbenzyl alcohol. Among these, hydroxyalkyl (meth)acrylates and hydroxy group-containing vinyl-aromatic compounds are preferred.

The hydroxy group-containing monomer also includes a hydroxy group-containing unsaturated carboxylic acid monomer, a hydroxy group-containing vinyl ether monomer, and a hydroxy group-containing vinyl ketone monomer. Among these, a hydroxy group-containing unsaturated carboxylic acid monomer is especially preferred.

The hydroxy group-containing unsaturated carboxylic acid monomer includes derivatives such as esters, amides, and anhydrides of acrylic acid, methacrylic acid, itaconic acid, fumaric acid and maleic acid, and among these, esters of acrylic acid and methacrylic acid are especially preferred. One alone or two or more kinds of these hydroxy group-containing monomers can be used either singly or as combined in two or more kinds.

The carboxy group-containing monomer includes an unsaturated carboxylic acid such as (meth)acrylic acid, maleic acid, fumaric acid, itaconic acid, tetraconic acid or cinnamic acid; and a free carboxy group-containing ester and a salt thereof, such as a monoester of a non-polymerizable polycarboxylic acid such as phthalic acid, succinic acid or adipic acid, and a hydroxy group-containing unsaturated compound such as (meth)allyl alcohol or 2-hydroxyethyl (meth)acrylate. Among these, an unsaturated carboxylic acid is especially preferred. One alone or two or more kinds of these carboxy group-containing monomers can be used either singly or as combined in two or more kinds.

The epoxy group-containing monomer includes (meth)allylglycidyl ether, glycidyl (meth)acrylate, and 3,4-oxycyclohexyl (meth)acrylate. One alone or two or more kinds of these epoxy group-containing monomers can be used either singly or as combined in two or more kinds.

In the nitrogen-containing heterocyclic group-containing monomer, the nitrogen-containing hetero ring includes pyrrole, histidine, imidazole, triazolidine, triazole, triazine, pyridine, pyrimidine, pyrazine, indole, quinoline, purine, phenazine, pteridine, and melamine. The nitrogen-containing hetero ring may contain any other hetero atom in the ring. Here, the monomer that contains a pyridyl group as the nitrogen-containing heterocyclic group includes a pyridyl group-containing vinyl compound such as 2-vinylpyridine, 3-vinylpyridine, 4-vinylpyridine 5-methyl-2-vinylpyridine, and 5-ethyl-2-vinylpyridine, and among these, 2-vinylpyridine and 4-vinylpyridine are especially preferred. One alone or two or more kinds of these nitrogen-containing hetero cyclic group-containing monomers can be used either singly or as combined in two or more kinds.

The alkoxysilyl group-containing monomer includes (meth)acryloxymethyltrimethoxysilane, (meth)acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxymethyltripropoxysilane, (meth)acryloxymethylmethyldipropoxysilane, (meth)acryloxymethyldimethylpropoxysilane, γ-(meth)acryloxypropyltrimethoxysilane, γ-(meth)acryloxypropylmethyldimethoxysilane, γ-(meth)acryloxypropyldimethylmethoxysilane, γ-(meth)acryloxypropyltriethoxysilane, γ-(meth)acryloxypropylmethyldiethoxysilane, γ-(meth)acryloxypropyldimethylethoxysilane, γ-(meth)acryloxypropyltripropoxysilane, γ-(meth)acryloxypropylmethyldipropoxysilane, γ-(meth)acryloxypropyldimethylpropoxysilane, γ-(meth)acryloxypropylmethyldiphenoxysilane, γ-(meth)acryloxypropyldimethylphenoxysilane, γ-(meth)acryloxypropylmethyldibenzyloxysilane, γ-(meth)acryloxypropyldimethylbenzyloxysilane, trimethoxyvinylsilane, triethoxyvinylsilane, 6-trimethoxysilyl-1,2-hexene, and p-trimethoxysilylstyrene. One alone or two or more kinds of these alkoxysilyl group-containing monomers can be used either singly or as combined in two or more kinds.

The tin-containing group-having monomer includes a tin-containing monomer such as allyltri-n-butyltin, allyltrimethyltin, allyltriphenyltin, allyltri-n-octyltin, (meth)acryloxy-n-butyltin, (meth)acryloxytrimethyltin, (meth)acryloxytriphenyltin, (meth)acryloxy-n-octyltin, vinyl-tri-n-butyltin, vinyltrimethyltin, vinyltriphenyltin, and vinyltri-n-octyltin. One alone or two or more kinds of these tin-containing monomers can be used either singly or as combined in two or more kinds.

In the present embodiment where a main chain except terminals of a polymer chain is modified, the modification

reaction is preferably copolymerization with the above-mentioned polar group-containing unsaturated monomer as a modifying agent. More specifically, the modification reaction can be emulsion polymerization for graft polymerization of the multicomponent copolymer with the above-mentioned polar group-containing unsaturated monomer.

In the case where a main chain except terminals of a polymer chain is modified, the modification reaction can be carried out in any mode of solution reaction or solid-phase reaction like in the case where terminals are modified, and needless-to-say, in such a case, at least one compound selected from the compounds (a) to (1) exemplified hereinabove for a modifying agent can also be used.

In emulsion polymerization, preferably, a polymerization initiator is used, and the polymerization initiator is not specifically limited and various types of polymerization initiators for emulsion polymerization can be used. For example, various polymerization initiators are usable, including benzoyl oxide, hydrogen peroxide, organic peroxides, such as cumene hydroperoxide, tert-butyl hydroperoxide, di-tert-butyl peroxide and dicumyl peroxide, and also 2,2-azobisisobutyronitrile, 2,2-azobis(2-diaminopropane) hydrochloride, 2,2-azobis(2-diaminopropane) dihydrochloride, 2,2-azobis(2,4-dimethylvaleronitrile), potassium persulfate, sodium persulfate, and ammonium persulfate.

The amount of the polymerization initiator to be used is preferably 1 to 100 mol% relative to the above-mentioned polar group-containing monomer, more preferably 10 to 100 mol%.

The amount of the above-mentioned unsaturated monomer, the polar group-containing unsaturated monomer to be used for modifying a main chain except terminals of a polymer chain is preferably 0.001 to 0.5 mmol/g relative to the multicomponent copolymer, more preferably 0.002 to 0.3 mmol/g, even more preferably 0.003 to 0.2 mmol/g. When the amount used is 0.001 mmol/g or more, low heat generation properties along with durability can improve, and when the amount is 0.5 mmol/g or less, the properties such as durability of the multicomponent copolymer can be prevented from being degraded and, as a result, low heat generation properties along with durability can improve.

The polystyrene-equivalent weight-average molecular weight (Mw) of the modified multicomponent copolymer is preferably 10,000 to 10,000,000, more preferably 100,000 to 9,000,000, even more preferably 150,000 to 6,000,000. The polystyrene-equivalent number-average molecular weight (Mn) of the multicomponent copolymer is preferably 10,000 to 10,000,000, more preferably 50,000 to 9,000,000, even more preferably 100,000 to 6,000,000. The molecular weight distribution [Mw/Mn (weight-average molecular weight/number-average molecular weight)] of the multicomponent copolymer is preferably 1.00 to 4.00, more preferably 1.50 to 3.50, even more preferably 1.80 to 3.00.

When the lower limit of Mw and Mn of the modified multicomponent copolymer each falls within the above range, durability such as mechanical strength and fracture characteristics of rubber composition can be improved, and when the upper limit thereof falls within the above range, high workability can be maintained. In addition, when the molecular weight distribution of the multicomponent copolymer is 4.00 or less, the modified multicomponent copolymer can be given sufficiently homogeneous physical properties.

The endothermic peak energy at 0 to 120°C of the modified multicomponent copolymer, as measured with a differential scanning calorimeter (DSC), is preferably 10 to 150 J/g, more preferably 30 to 120 J/g. When the endothermic peak energy of the modified multicomponent copolymer is 10 J/g or more, crystallinity of the modified multicomponent copolymer can be high, wear resistance of rubber compositions can further improve, and durability after crosslinking can be further improved. On the other hand, when the endothermic peak energy of the multicomponent copolymer is 150 J/g or less, processability of rubber compositions can improve.

The melting point of the modified multicomponent copolymer, as measured with a differential scanning calorimeter (DSC), is preferably 30 to 130°C, more preferably 30 to 110°C. When the melting point of the modified multicomponent copolymer is 30°C or higher, crystallinity of the modified multicomponent copolymer can increase, wear resistance of rubber composition can further improve, and durability after crosslinking can be further improved. When the melting point of the multicomponent copolymer is 130°C or lower, processability of rubber compositions can improve.

The crystallinity degree of the modified multicomponent copolymer is preferably 0.5 to 50%, more preferably 3 to 45%, even more preferably 5 to 45%. When the crystallinity degree of the modified multicomponent copolymer is 0.5% or more, the crystallinity derived from the non-conjugated olefin unit can be sufficiently secured to further improve durability such as fracture characteristics of rubber compositions. When the crystallinity degree of the multicomponent copolymer is 50% or less, processability in kneading a rubber composition can improve, and tackiness of a rubber composition blended with the multicomponent copolymer can increase, and therefore, for example, workability in sticking rubber members formed of rubber compositions as well as moldability of rubber products such as tires can also improve.

The glass transition temperature (Tg) of the modified multicomponent copolymer, as measured with a differential scanning calorimeter (DSC), is preferably 0°C or lower, more preferably -10°C or lower, even more preferably - 20°C or lower, and the lower limit is preferably -100°C or higher. When the glass transition temperature of the modified multicomponent copolymer is 0°C or lower, processability of rubber compositions can improve.

The modified multicomponent copolymer of the present embodiment can express low heat generation properties along with high durability, and can be therefore favorably used in a rubber composition and a resin composition to be mentioned below. In particular, a rubber composition using the modified multicomponent copolymer of the present embodiment has low heat generation properties along with high durability, and is therefore favorably used for rubber

products such as conveyor belts, rubber crawlers and hoses in addition to tires, and also for rubber products of vibration-proof rubber or seismic isolation rubber for use in vibration-proof devices or base-isolation devices.

[Rubber Composition]

The rubber composition of the present embodiment contains a rubber component that contains the above-mentioned, modified multicomponent copolymer of the present embodiment.

(Rubber Component)

The rubber component contained in the rubber composition of the present embodiment contains the above-mentioned, modified multicomponent copolymer of the present embodiment. In the rubber component, the modified multicomponent copolymer of the present embodiment may be combined with any other rubber component, and examples of the other rubber component include RSS and TSR, and in addition, natural rubber (NR) such as high-purity natural rubber and modified natural rubber such as epoxidated natural rubber, hydroxylated natural rubber, hydrogenated natural rubber and grafted natural rubber, as well as butadiene rubber (BR), styrene-butadiene rubber (SBR), acrylonitrile-butadiene rubber (NBR), chloroprene rubber, ethylene-propylene rubber (EPM), ethylene-propylene-non-conjugated diene rubber (EPDM), polysulfide rubber, silicone rubber, fluororubber, and urethane rubber. One alone or two or more kinds of these rubber components can be used either singly or as combined in two or more kinds.

Butadiene rubber (BR) can contain high-cis polybutadiene rubber in consideration of improving wear resistance. High-cis polybutadiene rubber is high-cis polybutadiene rubber in which the cis-1,4 bond content in the 1,3-butadiene unit is 90% or more and 99% or less in measurement by FT-IR. The cis-1,4 bond content in the 1,3-butadiene unit in high-cis polybutadiene rubber is preferably 95% or more and 99% or less.

A production method for high-cis polybutadiene rubber is not specifically limited, and the rubber can be produced in any known method. For example, there can be mentioned a method of polymerizing butadiene using a neodymium catalyst.

High-cis polybutadiene rubber is commercially available, and examples thereof include "BR01" and "T700" (both by JSR Corporation), and "Ubepol BR150L" (by Ube Industries, Ltd.).

The content of the modified multicomponent copolymer of the present embodiment in the rubber component is, from the viewpoint of securing the effect of expressing durability and low heat generation properties, preferably 50% by mass or more, more preferably 70% by mass or more, even more preferably 90% by mass or more, further more preferably 95% by mass or more, and is especially preferably 100% by mass or more, that is, especially preferably, the modified multicomponent copolymer accounts for the entire amount of the rubber component.

(Filler)

Preferably, the rubber composition of the present embodiment further contains a filler. Containing a filler enhances durability and reinforcing performance. Examples of the filler include silica, carbon black, aluminum oxide, clay, alumina, talc, mica, kaolin, glass balloons, glass beads, calcium carbonate, magnesium carbonate, magnesium hydroxide, calcium carbonate, magnesium oxide, titanium oxide, potassium titanate, and barium sulfate. One alone or two or more kinds of fillers can be used either singly or as combined in two or more kinds. From the viewpoint of improving dispersibility in the modified multicomponent copolymer, the filler preferably contains at least one selected from silica and carbon black.

Not specifically limited, examples of carbon black include SAF, ISAF, HAF, FF, FEF, GPF, SRF, CF, FT and MT grade carbon black. One alone or two or more kinds of carbon black can be used either singly or as combined in two or more kinds. Among these, SAF, ISAF and HAF-grade carbon black is preferred.

From the viewpoint of improving durability and low heat generation properties, carbon black I having a high affinity for the modified multicomponent copolymer is preferably employed. Preferred properties that carbon black I has are mentioned below.

The hydrogen release rate of carbon black I is preferably more than 0.3% by mass, more preferably 0.35% b mass or more, and the upper limit is generally 0.4% by mass or less. When the hydrogen release rate falls within the range, affinity with the modified multicomponent copolymer is high, low heat generation properties improve and durability also improves.

Here, the hydrogen release rate is described. (1) A carbon black sample is dried in a constant-temperature drying machine at 105°C for 1 hour, and cooled down to room temperature in a desiccator, (2) about 10 mg of the sample is accurately weighed in a tin-made tubular sample container, compressed therein and sealed up, (3) using a hydrogen analyzer (by Horiba, Ltd., EMGA621W), this is analyzed in an argon stream atmosphere, and the hydrogen gas yield in heating at 2000°C for 15 minutes is measured to express the mass fraction for the hydrogen release rate of the sample.

Also preferably, carbon black I has a dibutyl phthalate (DBP) absorption of 95 to 220 mL/100 g, a compressed DBP absorption (24M4DBP) of 90 to 200 mL/100 g, and a cetyltrimethylammonium bromide (CTAB) adsorption specific surface area of 70 to 200 $m^2$/g.

Here, the a dibutyl phthalate (DBP) absorption and the compressed DBP absorption (24M4DBP) are measured according to the method described in ASTM D2414-88 (JIS K6217-4:2001), and are expressed as a volume mL of dibutyl phthalate (DBP) absorbed per 100 g of carbon black I. The cetyltrimethylammonium bromide (CTAB) adsorption specific surface area is measured according to the method described in JIS K6217-3:2001, and is expressed as a specific surface area $m^2$/g per unit mass of carbon black.

The carbon black I can be obtained, for example, using a reactor apparatus containing a combustion gas generation zone, a reaction zone and a reaction stopping zone, in which a high-temperature combustion gas is generated in the combustion gas generation zone, next a raw material is sprayed into the reaction zone to form a reaction gas flow containing carbon black, and then in the reaction stopping zone, the reaction gas flow is rapidly cooled by a multistage rapidly-cooling medium introduction means to thereby terminate the reaction. In this case, carbon black I satisfies the following relational expressions (i) and (ii).

$$10<X<40 \quad \ldots \text{(i)}$$

$$90<Z<100 \ldots \text{(ii)}$$

In the above relational expression (i), X indicates a light transmittance of a toluene extract in carbon black (%) after introduction of the first rapidly cooling medium from the raw material introduction position, and Z in the relational expression (ii) indicates a light transmittance of a toluene extract in carbon black (%) after introduction of the final rapidly cooling medium. Here, the light transmittance of a toluene extract is measured according to the method described in JIS K6218:1997, Article 8, Method B, and is expressed as a percentage relative to pure toluene.

Carbon black I having such properties can be efficiently and readily obtained by controlling the reaction temperature and the residence time.

For example, the residence time in a reaction zone from spraying introduction of a raw material to introduction of a first rapidly cooling medium thereinto is referred to as $t_1$ (sec), the average reaction temperature in this zone is referred to as $T_1$ (°C), the residence time in the zone from introduction of the first rapidly cooling medium to introduction of the second rapidly cooling medium by the second rapidly cooling medium introducing means (in Fig. 1, 12-Y) is referred to as $t_2$ (sec), the average reaction temperature in this zone is referred to as $T_2$ (°C), further, the residence time in the zone from introduction of the second rapidly cooling medium to introduction of the last rapidly cooling medium (that is, the residence time in the zone to passing through the reaction stopping zone) is referred to as $t_3$ (sec), and the average reaction temperature in this zone is referred to as $T_3$ (°C), and these reaction temperatures and the residence times are so controlled as to satisfy the following relational expressions (iii), (iv) and (v) to obtain carbon black for blending in rubber.

$$2.00 \leq \alpha_1 \leq 5.00 \qquad \ldots \text{(iii)}$$

$$5.00 \leq \alpha_2 \leq 9.00 \qquad \ldots \text{(iv)}$$

$$-2.5 \times (\alpha_1+\alpha_2) + 85.0 \leq \beta \leq 90.0 \qquad \ldots \text{(v)}$$

(In these, $\alpha_1 = t_1 \times T_1$, $\alpha_2 = t_2 \times T_2$, $\beta = t_3 \times T_3$.)

Regarding the residence times $t_1$, $t_2$, and $t_3$, volume of the reaction gas fluid to be introduced is calculated according to a known thermodynamic calculation method and then the times are calculated according to the following expressions. Decomposition reaction of raw material oil and volume increase by rapidly cooling media are ignored.

Residence time $t_1$ (sec) = {volume passing through the reaction furnace from the raw material hydrocarbon introducing position to the first rapidly cooling medium introducing position ($m^3$)/volume of reaction gas fluid ($m^3$/sec)}

Residence time $t_2$ (sec) = {volume passing through the reaction furnace from the first rapidly cooling medium introducing position to introduction of the second rapidly cooling medium ($m^3$)/volume of reaction gas fluid ($m^3$/sec)}

Residence time $t_3$ (sec) = volume passing through the reaction furnace from the second rapidly cooling medium introducing position to introduction of the final rapidly cooling medium ($m^3$)/volume of reaction gas fluid ($m^3$/sec)

Carbon black I for use herein is preferably controlled so as to satisfy the following relational expressions (vi), (vii) and (viii).

$$20 < X < 40 \ldots \text{(vi)}$$

$$50 < Y < 60 \ldots \text{(vii)}$$

$$90 < Z < 95 \ldots \text{(viii)}$$

In these, Y indicates a light transmittance of a toluene extract in carbon black after introduction of the second rapidly cooling medium, and X and Z are the same as above.

More specifically, carbon black I can be produced according to the method described in WO2010/038768.

Silica is not specifically limited, and examples thereof include wet-process silica, dry-process silica and colloidal silica. One alone or two or more kinds of silica can be used either singly or as combined in two or more kinds. Among these, wet-process silica is preferred.

The content of the filler in the rubber composition of the present embodiment is preferably 30 to 100 parts by mass relative to 100 parts by mass of the rubber component. When the content is 30 parts by mass or more, durability and wear resistance can be improved, and when the content is 100 parts by mass or less, low loss tangent and high elastic modulus can be kept good.

In the case where the rubber composition of the present embodiment contains silica as a filler, preferably, the composition contains a silane coupling agent from the viewpoint of improving the blending effect of silica. Examples of the silane coupling agent include vinyltriethoxysilane, vinyltris(B-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β-(aminoethyl)-γ-aminopropyltrimethoxysilane, bis-triethoxysilylpropyl tetrasulfide, and bis-triethoxysilylpropyl disulfide. One alone or two or more kinds of these silane coupling agents can be used either singly or as combined in two or more kinds.

The content is not specifically limited, but is preferably 1 to 12% by mass relative to the content of the filler silica, more preferably 3 to 10% by mass. When the content of the silane coupling agent is 1% by mass or more relative to the content of the filler silica, the effect of improving dispersibility of the filler can be readily attained, and when the content is 12% by mass or less, too much blending of the silane coupling agent can be suppressed and the addition effect can be efficiently attained to provide economical merits.

(Other Components)

As needed, the rubber composition of the present embodiment can appropriately contain various components such as a crosslinking agent (including a vulcanizing agent such as sulfur), a crosslinking accelerator (a vulcanization accelerator), a crosslinking acceleration aid (a vulcanization acceleration aid), an antiaging agent, zinc oxide (ZnO), a softener, waxes, an antioxidant, a foaming agent, a plasticizer, a lubricant, a tackifier, a petroleum resin, a UV absorbent, a dispersant, a compatibilizer and a homogenizer, within a range not detracting from the advantageous effects of the present invention.

The rubber composition of the present embodiment has low heat generation properties along with high durability,

and is therefore favorably used for rubber products such as conveyor belts, rubber crawlers and hoses in addition to tires to be mentioned below, and also for rubber products of vibration-proof rubber or seismic isolation rubber for use in vibration-proof devices or base-isolation devices.

(Production of Rubber Composition)

The rubber composition of the present embodiment can be produced by mixing and kneading the above-mentioned components using a kneading machine such as a Banbury mixer, a roll or an internal mixer. Here, in blending and kneading them, all the components can be blended and kneaded at a time, or can be blended and kneaded in multiple stages such as two stages or three stages. In kneading them, a kneading machine such as a roll, an internal mixer or a Banbury rotor can be used. Further, in molding the rubber composition into sheets or belts, a known molding machine such as an extrusion molding machine or a pressing machine can be used.
The rubber composition of the present embodiment can be crosslinked. The crosslinking condition is not specifically limited, and in general, a temperature of 140 to 180°C and a time of 5 to 120 minutes can be employed.

[Resin Composition and Resin Product]

The resin composition of the present embodiment contains the above-mentioned, modified multicomponent copolymer of the present embodiment. By combining the modified multicomponent copolymer with any other resin component, various properties such as durability and impact resistance intrinsic to the other resin component can be improved. Also, the resin product of the present embodiment uses the resin composition of the present embodiment.
The resin component to be combined with the modified multicomponent copolymer is not specifically limited, and various resin components can be employed and selected depending on the properties desired for the resin product. Examples of such resin components include homopolymers such as polyethylene, polypropylene, polybutene and polystyrene, copolymers such as ethylene-propylene copolymer, ethylene-methacrylic acid copolymer, ethylene-ethyl acrylate copolymer, ethylene-propylene-diene tercopolymer, and ethylene-vinyl acetate copolymer, and polyolefin resins such as ionomer resins thereof, as well as polyvinyl alcohol resins such as vinyl alcohol homopolymer and ethylene-vinyl alcohol copolymer, poly(meth)acrylic acid resins and ester resins thereof, polyamide resins such as aliphatic polyamide resin and aromatic polyamide resin, polyethylene glycol resins, carboxyvinyl copolymers, styrene-maleic acid copolymers, polyvinylpyrrolidone resins such as vinylpyrrolidone homopolymer and vinylpyrrolidone-vinyl acetate copolymer, and polyester resins, cellulose resins, mercaptomethanol, hydrogenated styrene-butadiene, syndiotactic polybutadiene, trans-polybutadiene, and trans-polyisobutadiene.
In the resin composition of the present embodiment, the content of the modified multicomponent copolymer relative to all the resin components can be appropriately controlled depending on the resins to be combined and the desired properties, and is generally 1 to 99% by mass or so, preferably 5 to 90% by mass.
The resin composition of the present embodiment can contain various additives depending on the desired properties. As various additives, additives that can be contained in ordinary resin compositions can be used with no specific limitation, and examples thereof include a weatherproof agent such as a UV absorbent and a light stabilizer, an antioxidant, a filler exemplified as a filler that can be contained in the above-mentioned rubber composition, a softener, a colorant, a flame retardant, a plasticizer and an antistatic agent.

[Tire]

The tire of the present embodiment uses the rubber composition of the present embodiment mentioned hereinabove. Such a tire uses the rubber composition of the present embodiment and therefore has low heat generation properties and high durability.
The application site of the rubber composition of the present embodiment in tires is not specifically limited and can be appropriately selected depending on intended purposes, and examples thereof include treads, base treads, sidewalls, side-reinforcing rubbers and bead fillers. From the viewpoint of effectively utilizing the effects of the rubber composition of the present invention having low heat generation properties along with high durability, the application site is preferably treads, especially preferably treads of studless tires.
Any conventional method is usable as a method for producing the tire of the present embodiment. For example, members that are used for producing ordinary tires such as a carcass layer, a belt layer and a tread layer of an unvulcanized rubber composition and/or cord of the present embodiment are sequentially layered on a tire-forming drum, and then the drum is drawn away to give a green tire. Next, the green tire is heated and vulcanized according to an ordinary method to produce a desired tire (for example, a pneumatic tire).

Examples

Hereinunder the present invention is described in more detail with reference to Examples given below, but the present invention is not whatsoever restricted to the following Examples.

(Production Example 1: Production of multicomponent copolymer)

As an aromatic vinyl compound, 75 g of styrene and 600 mL of toluene were put into a fully dried, 1000-mL pressure-resistant stainless reactor.

In a glove box in a nitrogen atmosphere, 0.1 mmol of ((1-benzyldimethylsilyl-3-methyl)indenyl)bis(bis(dimethylsilyl)amide)amide gadolinium complex ((1-benzyldimethyl-3-methyl-Si)$_2C_9H_5Gd[N(SiHMe_2)_2]_2$), 0.1 mmol of dimethylanilinium tetrakis(pentafluorophenyl)borate ($Me_2NHPhB(C_6F_5)_4$) and 0.45 mmol of diisobutylaluminum hydride were put into a glass container and dissolved in 40 mL of toluene therein to give a catalyst solution.

The resultant catalyst solution was added to the above pressure-resistant stainless reactor, and heated at 70°C.

Next, ethylene was put into the pressure-resistant stainless reactor under a pressure of 1.5 MPa, and further 80 mL of a toluene solution containing 20 g of 1,3-butadiene was put into the pressure-resistant stainless container, taking 8 hours, and the monomer were copolymerized at 70°C for 8.5 hours in total.

Next, 1 mL of an isopropanol solution of 5 mass% 2,2'-methylene-bis(4-ethyl-6-t-butylphenol) (NS-5) was added to the pressure-resistant stainless reactor to stop the reaction. Next, using a large amount of methanol, the copolymer was separated and dried in vacuum at 50°C to be a multicomponent copolymer.

The resultant multicomponent copolymer was analyzed according to the following methods to measure the number-average molecular weight (Mn), the weight-average molecular weight (Mw), the molecular weight distribution (Mw/Mn), the content of the conjugated diene unit (butadiene unit), the non-conjugated olefin unit (ethylene unit) and the aromatic vinyl unit (styrene unit), the melting point ($T_m$), the endothermic peak energy and the crystallinity degree. The results are shown in Table 1.

Of the resultant multicomponent copolymer, the main chain structure was confirmed according to the following method, and in the $^{13}$C-NMR spectrum chart thereof, no peak was detected at 10 to 24 ppm. This conforms that the main chain of the resultant multicomponent copolymer is formed of an acyclic structure alone.

(Analysis of Multicomponent Copolymer and Modified Multicomponent Copolymer)

The above-mentioned multicomponent copolymer and the modified multicomponent copolymer produced by modifying the multicomponent copolymer in the following Examples were analyzed according to the following methods to measure the number-average molecular weight (Mn), the weight-average molecular weight (Mw), the molecular weight distribution (Mw/Mn), the content of the conjugated diene unit (butadiene unit), the non-conjugated olefin unit (ethylene unit) and the aromatic vinyl unit (styrene unit), the melting point ($T_m$), the glass transition temperature (Tg), the endothermic peak energy and the crystallinity degree. The main chain structure was confirmed according to the following method.

(1) Number-average molecular weight (Mn), weight-average molecular weight (Mw), and molecular weight distribution (Mw/Mn)

According to gel permeation chromatography [GPC: HLC-8121GPC/HT, by Tosoh Corporation, columns: GM-$H_{HR}$-H(S)HT × 2 by Tosoh Corporation, detector: differential refractometer (RI)] based on monodispersed polystyrene, the polystyrene-equivalent number-average molecular weight (Mn), weight-average molecular weight (Mw), peak top molecular weight (Mp) and molecular weight distribution (Mw/Mn) of the copolymer were measured. The measurement temperature was 40°C.

(2) Content of conjugated diene unit, non-conjugated olefin unit and aromatic vinyl unit

The content (mol%) of the conjugated diene unit (butadiene unit), the non-conjugated olefin unit (ethylene unit) and the aromatic vinyl unit (styrene unit) in the copolymer was determined from the integral ratio of each peak in the $^1$H-NMR spectrum (100°C, d-tetrachloroethane standard: 6 ppm).

(3) Melting point ($T_m$)

Using a differential scanning calorimeter (DSC, "DSCQ2000" by TA Instruments Japan Corp.), the melting point of the copolymer was measured according to JIS K 7121-1987.

(4) Glass transition temperature (Tg)

Using a differential scanning calorimeter (DSC, "DSCQ2000" by TA Instruments Japan Inc.), the glass transition temperature of the copolymer was measured.

(5) Endothermic peak energy

Using a differential scanning calorimeter (DSC, "DSCQ2000" by TA Instruments Japan Corp.), a sample of the copolymer was heated from -150°C up to 150°C at a heating rate of 10°C/min according to JIS K 7121-1987, and the endothermic peak energy at 0 to 120°C at that time (1st run) was measured.

(6) Crystallinity degree

The crystal melting energy of polyethylene of 100% crystal and the melting peak energy of the resultant copolymer were measured, and from the energy ratio of polyethylene to the copolymer, the crystallinity degree was calculated. The melting peak energy was measured using a differential scanning calorimeter (DSC, "DSCQ2000" by TA Instruments Japan Corp.).

(7) Confirmation of main chain structure

$^{13}C$-NMR spectrum of the copolymer was analyzed.

Table 1

| | | |
|---|---|---|
| Number-Average Molecular Weight (Mn) | - | $73 \times 10^3$ |
| Weight-Average Molecular Weight (Mw) | - | $257 \times 10^3$ |
| Molecular Weight Distribution (Mw/Mn) | - | 3.5 |
| Content of Conjugated Diene Unit (butadiene unit) | mol% | 12 |
| Content of Non-Conjugated Olefin Unit (ethylene unit) | mol% | 71 |
| Content of Aromatic Vinyl Unit (styrene unit) | mol% | 17 |
| Melting Point | °C | 74 |
| Glass Transition Temperature | °C | -29 |
| Endothermic Peak Energy | J/g | 55.0 |
| Crystallinity Degree | % | 18.8 |

(Production Example 2: Production of carbon black)

Using a carbon black production furnace shown in Fig. 1, carbon black I was produced. In Fig. 1, a 3-stage rapidly cooling medium introducing means including a first rapidly cooling medium introducing means 12-X, a second rapidly cooling medium introducing means 12-Y and a final rapidly cooling medium introducing means 12-Z was used as a multistage rapidly cooling medium introduction means 12.

For monitoring the temperature inside the production furnace, the production furnace was so designed that a few thermocouples could be introduced into arbitrary sites inside the furnace. In the carbon black production furnace, heavy oil A having a specific gravity of 0.8622 (15°C/4°C) was used as fuel, and heavy oil having the properties shown in Table 2 was used as a raw material oil. The operating conditions for the production furnace and the properties of carbon black are shown in Table 3.

Table 2

| | |
|---|---|
| Specific Gravity (JIS K2249) (15/4°C) | 1.1319 |
| Heavy Viscosity (JIS K2283) ($mm^2/s$ at 50°C) | 26.7 |
| Water Content (JIS K2275) (%) | 0.5 |
| Residual Carbon (JIS K2210) (%) | 11.6 |

(continued)

| | | |
|---|---|---|
| Sulfur Content (JIS K2213) (%) | | 0.4 |
| Carbon Content (%) | | 90.1 |
| Hydrogen Content (%) | | 5.4 |
| BMC I *1 | | 160 |
| Distillation Properties (°C) | I.B.P. *2 | 188 |
| | 10% Fractionation Point | 234 |
| | 30% Fractionation Point | 291 |
| | 50% Fractionation Point | 360 |
| *1, BMC I: Bureau of Mines Correlation Index<br>*2, I.B.P.: Initial Boiling Point | | |

Table 3

| | | | |
|---|---|---|---|
| Raw Material Oil Introduction Condition | Introduction Amount | kg/hr | 218 |
| | Pre-heating Temperature | °C | 213 |
| Air Introduction Condition | Total Air Introduction Amount | kg/hr | 1021 |
| | Pre-heating Temperature | °C | 612 |
| | Fuel Introduction Amount | kg/hr | 50 |
| Residence Time $t_1$ | | sec. | 0.0028 |
| Residence Time $t_2$ | | sec. | 0.0056 |
| Residence Time $t_3$ | | sec. | 0.073 |
| Average Reaction Temperature $T_1$ | | °C | 1486 |
| Average Reaction Temperature $T_2$ | | °C | 1238 |
| Average Reaction Temperature $T_3$ | | °C | 1177 |
| $\alpha_1 = t_1 \times T_1$ | | sec·°C | 4.16 |
| $\alpha_2 = t_2 \times T_2$ | | sec·°C | 6.93 |
| $\beta = t_3 \times T_3$ | | sec·°C | 85.92 |
| X (light transmittance of toluene extract) | | % | 29.1 |
| Y (light transmittance of toluene extract) | | % | 51.6 |
| X (light transmittance of toluene extract) | | % | 90.9 |
| Hydrogen Release Rate | | mass% | 0.34 |
| DBP Oil Absorption | | ml/100 g | 160 |
| 24M4DBP Oil Absorption | | ml/100 g | 110 |
| CTAB Adsorption Specific Surface Area | | $m^2/g$ | 100 |

(Example 1: Production of modified multicomponent copolymer)

The multicomponent copolymer produced in Production Example 1 was modified with a modifying agent, 2-cyanopyridine to produce a terminal-modified multicomponent copolymer. The number-average molecular weight (Mn) of the resultant modified multicomponent copolymer was $58 \times 10^3$, the weight-average molecular weight (Mw) thereof was $170 \times 10^3$, and the molecular weight distribution (Mw/Mn) thereof was 2.9.

(Examples 2 and 3, Comparative Examples 1 and 2)

According to the formulation (part by mass) shown in Table 4, a rubber composition was produced using a Banbury mixer. The resultant rubber composition was vulcanized at 160°C for 20 minutes, and then, using a kinematic shear viscoelastometer (by TA Instruments Corporation), Δtanδ (tanδ max - tanδ 0.1% strain) thereof at a strain of 0.1 to 30% was measured under the condition of a temperature of 50°C and a frequency of 15 Hz. Δtanδ of Example 2 was expressed as an index based on Δtanδ 100 of Comparative Example 1, and Δtanδ of Example 3 was expressed as an index based on Δtanδ 100 of Comparative Example 2. A smaller Δtanδ means more excellent low heat generation properties.

Table 4

| | | Example | Comparativ e Example | Example | Comparativ e Example |
|---|---|---|---|---|---|
| | | 2 | 1 | 3 | 2 |
| Modified Multicomponent Copolymer | part by mass | 100.0 | 0.0 | 100.0 | 0.0 |
| Multicomponent Copolymer | part by mass | 0.0 | 100.0 | 0.0 | 100.0 |
| Carbon Black A | part by mass | 50.0 | 50.0 | 0.0 | 0.0 |
| Carbon Black B *1 | part by mass | 0.0 | 0.0 | 50.0 | 50.0 |
| Oil*2 | part by mass | 10.0 | 10.0 | 10.0 | 10.0 |
| Stearic Acid | part by mass | 1.0 | 1.0 | 1.0 | 1.0 |
| Wax *3 | part by mass | 1.5 | 1.5 | 1.5 | 1.5 |
| Antiaging Agent *4 | part by mass | 1.0 | 1.0 | 1.0 | 1.0 |
| Petroleum Resin *5 | part by mass | 15.0 | 15.0 | 15.0 | 15.0 |
| Sulfur | part by mass | 1.2 | 1.2 | 1.2 | 1.2 |
| Vulcanization Accelerator DPG*6 | part by mass | 1.1 | 1.1 | 1.1 | 1.1 |
| Vulcanization Accelerator MBTS *7 | part by mass | 0.5 | 0.5 | 0.5 | 0.5 |
| Vulcanization Accelerator NS*8 | part by mass | 0.6 | 0.6 | 0.6 | 0.6 |
| Zinc Oxide*9 | part by mass | 2.5 | 2.5 | 2.5 | 2.5 |
| Δtanδ | - | 78.0 | 100 | 82.3 | 100 |

The components used in Examples and Comparative Examples in Table 4 are as mentioned below.

The multicomponent copolymer is one produced in Production Example 1, and carbon black A (carbon black I) is one produced in Production Example 2.

*1, Carbon black B: Carbon Black N234 (Seast 7HM (trademark) by Tokai Carbon Co., Ltd.)

*2, Petroleum hydrocarbon process oil, product name, "DAIANA PROCESS OIL NS-28" by Idemitsu Kosan Co., Ltd.

*3, Wax: Microcrystalline was, by Seiko Chemical Co., Ltd.
*4, Antiaging agent: product name "Nocrac 6C" by Ouchi Shinko Chemical Industrial Co., Ltd.
*5, Petroleum resin: C9 resin, product name "Nisseki Neopolymer 140" by Nippon Synthetic Resin Co., Ltd.
*6, Vulcanization accelerator DPG: product name "Nocceler D" by Ouchi Shinko Chemical Industrial Co., Ltd.
*7, Vulcanization accelerator MBTS: di-2-benzothiazolyl disulfide, product name "Nocceler DM-P" by Ouchi Shinko Chemical Industrial Co., Ltd.
*8, Vulcanization accelerator NS: N-(t-butyl)-2-benzothiazolylsulfenamide, product name "Sanceler NS-G" by Sanshin Chemical Industry Co., Ltd.
*9, Zinc oxide: by Hakusui Tech Co., Ltd.

Table 4 confirms that the rubber composition of the present invention uses a modified multifunctional polymer prepared by modifying a multicomponent copolymer having high durability and therefore has high durability, especially has a small $\Delta\tan\delta$ and has excellent low heat generation properties. Comparison between Examples 2 and 3 confirms that the rubber composition using carbon black I having a high affinity with the modified multicomponent copolymer has a higher effect of improving low heat generation properties.

(Production Example 3: Production of multicomponent copolymer A)

As an aromatic vinyl compound, 91 g of styrene and 379 g of toluene were put into a fully dried, 2000-mL pressure-resistant stainless reactor.
In a glove box in a nitrogen atmosphere, 0.1 mmol of mono(bis(1,3-t-butyldimethylsilyl)indenyl)bis(bis(dimethylsilyl)amide) gadolinium complex $(1,3\text{-}[t\text{-}Bu)Me_2Si]_2C_9H_5Gd[N(SiHMe_2)_2]_2C_9H_5Gd[N(SiHMe_2)_2]_2)$, 0.1 mmol of dimethylanilinium tetrakis(pentafluorophenyl)borate $(Me_2NHPhB(C_6F_5)_4)$ and 0.3 mmol of triisobutylaluminum were put into a glass container and dissolved in 63 mL of toluene therein to give a catalyst solution.
The resultant catalyst solution was added to the above pressure-resistant stainless reactor, and heated at 60°C.
Next, ethylene was put into the pressure-resistant stainless reactor under a pressure of 1.0 to 1.5 MPa, and copolymerized therein at 85°C for a total of 4 hours. Regarding 1,3-butadiene, 280 g of a toluene solution containing 70 g of 1,3-butadiene was continuously added at a rate of 1.1 to 1.2 g/min.
Next, 1 mL of an isopropanol solution of 5 mass% 2,2'-methylene-bis(4-ethyl-6-t-butylphenol) (NS-5) was added to the pressure-resistant stainless reactor to stop the reaction. Next, using a large amount of methanol, the copolymer was separated and dried in vacuum at 50°C to be a multicomponent copolymer A.

(Production Example 4: Production of multicomponent copolymer B)

A multicomponent copolymer B was produced in the same manner as in Production Example 3, except that ethylene was put into the pressure-resistant stainless reactor under a pressure of 1.5 MPa, the copolymerization was carried out at 75°C for a total of 3 hours, and the 1,3-butadiene-containing toluene solution was continuously put into the pressure-resistant stainless reactor at 1.5 to 1.6 g/min.
The multicomponent copolymers A and B produced in Production Examples 3 and 4 were analyzed according to the above-mentioned methods to measure the number-average molecular weight (Mn), the weight-average molecular weight (Mw), the molecular weight distribution (Mw/Mn), the content of the conjugated diene unit (butadiene unit), the non-conjugated olefin unit (ethylene unit), the aromatic vinyl unit (styrene unit), the melting point ($T_m$), the glass transition temperature (Tg), the endothermic peak energy and the crystallinity degree. The results are shown in Table 5.

Table 5

| | | Multicomponent Copolymer A | Multicomponent Copolymer B |
|---|---|---|---|
| Number-Average Molecular Weight (Mn) | - | $163 \times 10^3$ | $184 \times 10^3$ |
| Weight-Average Molecular Weight (Mw) | - | $513 \times 10^3$ | $457 \times 10^3$ |
| Molecular Weight Distribution (Mw/Mn) | - | 3.2 | 2.5 |
| Content of Conjugated Diene Unit (butadiene unit) | mol% | 39 | 36 |
| Content of Non-Conjugated Olefin Unit (ethylene unit) | mol% | 48 | 50 |

(continued)

| | | Multicomponent Copolymer A | Multicomponent Copolymer B |
|---|---|---|---|
| Content of Aromatic Vinyl Unit (styrene unit) | mol% | 13 | 14 |
| Melting Point | °C | 80 | 80 |
| Endothermic Peak Energy | J/g | 42.0 | 46.0 |
| Crystallinity Degree | % | 17.8 | 15.8 |

(Example 4)

The multicomponent copolymer B produced in Production Example 4 was modified with a modifying agent, maleic acid to produce a modified multicomponent copolymer in which the main chain except the terminal of the multicomponent copolymer was modified. Specifically, the modified multicomponent copolymer was produced as follows.

10 g of the multicomponent copolymer and 190 g of dewatered toluene were put into a 1000-mL pressure-resistant glass bottle, and dissolved at 70°C. Next, 11.4 mL of a toluene solution of maleic anhydride (maleic anhydride content: 10% by mass), and 3 mL of a toluene solution of azobisisobutyronitrile (by Tokyo Chemical Industry Co., Ltd.) (azobisisobutyronitrile content: 0.2 mol/L) were further added, and reacted at 70°C for 12 hours. After the reaction, the reaction product was separated using a large amount of methanol, and dried in vacuum at 50°C to give a modified multicomponent copolymer A in which the main chain except the terminal was modified.

(Production Example 5)

According to the formulation (part by mass) shown in Table 6, the components were mixed and kneaded using a kneading and extrusion molding evaluation tester ("Laboplastomill 90cc (Model Number)" (by Toyo Seiki Seisakusho, Ltd.) under the condition of 180°C and a rotation of 50 rpm for 5 minutes. The resultant resin composition was stirred in 2 L of acetone to remove the unreacted matters, and dried in vacuum at 50°C to give a modified multicomponent copolymer B in which the main chain except the terminal was modified.

(Comparative Example 3)

According to the formulation (part by mass) shown in Table 6, a copolymer C was produced in the same manner as in Example 5.

Table 6

| | | Example 5 | Comparative Example 3 |
|---|---|---|---|
| Multicomponent Copolymer A | part by mass | 100 | - |
| Polyethylene *10 | part by mass | - | 100 |
| Organic Peroxide *11 | part by mass | 0.16 | 0.16 |
| Maleic Anhydride *12 | part by mass | 5.0 | 5.0 |

The components used in Example and Comparative Example shown in Table 6 are as mentioned below. The multicomponent copolymer A is one produced in Production Example 3.

*10, Polyethylene: Metallocene catalyst L-PDPE, product name "1540F" by Ube Maruzen Polyethylene Co., Ltd.
*11, Organic peroxide dicumyl peroxide, product name "Percumyl D-40" by NOF Corporation
*12, Maleic anhydride: by Tokyo Chemical Industry Co., Ltd.

The modified multicomponent copolymers A and B and the polymer C obtained in Examples 4 and 5 and Comparative Example 3 were quantified for the graft ratio. The quantification results are shown in Table 7. The graft ratio was determined as follows. Using a mold having a thickness of 2 mm, the polymer obtained in each example was pressed at 120°C for 5 minutes and then rapidly cooled for 5 minutes to give molded resin articles A to C (150 mm × 150 mm × 1 mm). Using FT-IR ("IR Presfige-21 (Model Number)" by Shimadzu Corporation), these molded articles

were analyzed to measure the area of the peak (at around 1780 $cm^{-1}$) derived from the C=O expansion of maleic anhydride therein.

Table 7

| | | Example 4 | Example 5 | Comparative Example 3 |
|---|---|---|---|---|
| Graft Ratio | mass% | 2.6 | 3.9 | 0.0 |

The modified multicomponent copolymers obtained in Examples 4 and 5 each have a graft ratio of 2.6 and 3.9% by mass, respectively, and it was confirmed that, in these modified multicomponent copolymers, the main chain except the terminal of the polymer chain was modified, and the modified multicomponent copolymers of the present invention can be produced by any of solution reaction or solid-phase reaction. On the other hand, it was confirmed that the polyethylene resin could not be modified by solid-phase reaction in Comparative Example 3.

Industrial Applicability

According to the present invention, there can be provided a modified multicomponent copolymer capable of expressing low heat generation properties along with high durability, and a rubber composition, a resin composition and a tire containing the modified multicomponent copolymer. The rubber composition of the present embodiment is favorably used not only for tires but also other rubber products such as conveyor belts, rubber crawlers, hoses and also for those of vibration-proof rubber or seismic isolation rubber for use in vibration-proof devices or base-isolation devices.

Reference Signs List

1. Carbon Black Production Furnace
10. Reaction Chamber
11. Reaction Continuing and Cooling Chamber
12. Multistage Rapidly Cooling Medium Introducing Means
12-X. First Rapidly Cooling Medium Introducing Means
12-Y Second Rapidly Cooling Medium Introducing Means
12-Z. Last Rapidly Cooling Medium Introducing Means

**Claims**

**1.** A modified multicomponent copolymer in which a polymer chain of a multicomponent copolymer containing a conjugated diene unit, a non-conjugated olefin unit and an aromatic vinyl unit is modified with a functional group containing at least one atom selected from an oxygen atom, a nitrogen atom and a silicon atom.

**2.** The modified multicomponent copolymer according to claim 1, wherein a terminal of a polymer of the multicomponent copolymer is modified with the functional group.

**3.** The modified multicomponent copolymer according to claim 1, wherein the main chain of a polymer of the multicomponent copolymer is modified with the functional group.

**4.** The modified multicomponent copolymer according to claim 2 or 3, wherein the terminal is modified with at least one compound selected from the following compounds (a) to (j):

Compound (a): a compound represented by the following general formula (1):

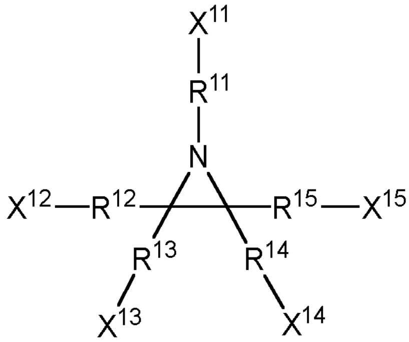

(1)

wherein $X^{11}$ to $X^{15}$ each independently represent a hydrogen atom, or a monovalent functional group containing at least one selected from a halogen atom, a carbonyl group, a thiocarbonyl group, an isocyanate group, a thioisocyanate group, an epoxy group, a thioepoxy group, a halogenosilyl group, a hydrocarbyloxysilyl group and a sulfonyloxy group, but not containing an active proton and an onium salt, and at least one of $X^{11}$ to $X^{15}$ is not a hydrogen atom; $R^{11}$ to $R^{15}$ each independently represent a single bond, or a divalent hydrocarbon group having 1 to 18 carbon atoms; and plural aziridine rings may bond via any of $X^{11}$ to $X^{15}$ and $R^{11}$ to $R^{15}$;
Compound (b): a halogenated organic metal compound, a halogenated metal compound or an organic metal compound represented by the following general formulae (2-1) to (2-5):

$$R^{21}_{n_{21}}—M^{21}—Z^{21}_{4-n_{21}} \quad (2\text{-}1)$$

$$M^{21}—Z^{21}_{4} \quad (2\text{-}2)$$

$$M^{21}—Z^{21}_{3} \quad (2\text{-}3)$$

$$R^{22}_{n_{21}}—M^{21}\left(R^{23}—COOR^{24}\right)_{4-n_{21}} \quad (2\text{-}4)$$

$$R^{22}_{n_{21}}—M^{21}\left(R^{23}—COR^{24}\right)_{4-n_{21}} \quad (2\text{-}5)$$

wherein $R^{21}$ to $R^{23}$ each independently represent a hydrocarbon group having 1 to 20 carbon atoms, $R^{24}$ represents a hydrocarbon group having 1 to 20 carbon atoms, and may contain a carbonyl group or an ester group in the side chain, $M^{21}$ represents a tin atom, a silicon atom, a germanium atom or a phosphorus atom, $Z^{21}$ represents a halogen atom, and $n_{21}$ represents an integer of 0 to 3;
Compound (c): a hetero-cumulene compound containing a $Y^{01}=C=Y^{02}$ bond (where $Y^{01}$ represents a carbon atom, an oxygen atom, a nitrogen atom or a sulfur atom, and $Y^{02}$ represents an oxygen atom, a nitrogen atom or a sulfur atom) in the molecule;
Compound (d): a 3-membered heterocyclic compound having a bond represented by the following general formula (3):

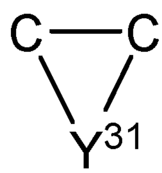

(3)

wherein $Y^{31}$ represents an oxygen atom or a sulfur atom;
Compound (e): a halogenated isocyano compound;
Compound (f): a carboxylic acid, an acid halide compound, an ester compound, a carbonate ester or an acid anhydride represented by the following general formulae (4-1) to (4-6):

$R^{41}\text{-(-COOH)}_{n_{41}}$ (4-1)

$R^{42}\text{-(-COZ}^{41})_{n_{41}}$ (4-2)

$R^{43}\text{-(-COOR}^{44})$ (4-3)

$R^{45}\text{-OCOO-}R^{46}$ (4-4)

$R^{47}\text{-(-COOCOR}^{48})_{n_{41}}$ (4-5)

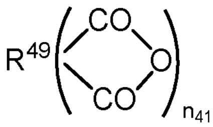

(4-6)

wherein $R^{41}$ to $R^{49}$ each independently represent a hydrocarbon group having 1 to 50 carbon atoms, $Z^{41}$ represents a halogen atom, and $n_{41}$ represents an integer of 1 to 5;

Compound (g): a carboxylic acid metal salt represented by the following general formulae (5-1) to (5-3):

$$R^{51}_{n_{51}}\text{—}M^{51}\text{—}(\text{OCOR}^{52})_{4\text{-}n_{51}} \quad (5\text{-}1)$$

$$R^{53}_{n_{51}}\text{—}M^{51}\text{—}(\text{OCO—}R^{54}\text{—COOR}^{55})_{4\text{-}n_{51}} \quad (5\text{-}2)$$

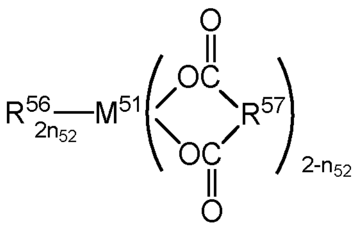

(5-3)

wherein $R^{51}$ to $R^{57}$ each independently represent a hydrocarbon group having 1 to 20 carbon atoms, $M^{51}$ represents a tin atom, a silicon atom or a germanium atom, $n_{51}$ represents an integer of 0 to 3, and $n_{52}$ represents an integer of 0 or 1;

Compound (h): an N-substituted aminoketone, an N-substituted aminothioketone, an N-substituted aminoaldehyde, an N-substituted aminothioaldehyde, or a compound having a -C-(=$M^{01}$)-N< bond ($M^{01}$ represents an oxygen atom or a sulfur atom) in the molecule;

Compound (i): a compound having an N=C- bond;

Compound (j); a compound having a phosphoric acid residue represented by the following general formula (6):

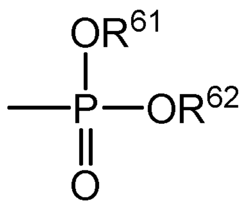

(6)

wherein $R^{61}$ and $R^{62}$ each independently represent an alkyl group having 1 to 20 carbon atoms, a monovalent alicyclic hydrocarbon group having 3 to 20 carbon atoms, a monovalent aromatic hydrocarbon group having 6 to 20 carbon atoms, or a hydrogen atom.

5. The modified multicomponent copolymer according to any one of claims 1 to 4, wherein a chain in the main chain of a polymer chain of the multicomponent copolymer is modified with the functional group.

6. The modified multicomponent copolymer according to claim 5, which is modified by copolymerizing the main chain with a polar group-containing unsaturated monomer.

7. The modified multicomponent copolymer according to any one of claims 1 to 6, wherein the non-conjugated olefin unit is an acyclic non-conjugated olefin unit.

8. The modified multicomponent copolymer according to claim 7, wherein the acyclic non-conjugated olefin unit is an ethylene unit alone.

9. The modified multicomponent copolymer according to any one of claims 1 to 8, wherein the aromatic vinyl unit contains a styrene unit.

10. The modified multicomponent copolymer according to any one of claims 1 to 9, wherein the conjugated diene unit contains at least one selected from a 1,3-butadiene unit and an isoprene unit.

11. The modified multicomponent copolymer according to claim 10, wherein the conjugated diene unit is a 1,3-butadiene unit alone.

12. The modified multicomponent copolymer according to any one of claims 1 to 11, wherein the content of the conjugated diene unit is 1 to 50 mol%, the content of the non-conjugated olefin unit is 40 to 97 mol%, and the content of the aromatic vinyl unit is 2 to 35 mol%.

13. The modified multicomponent copolymer according to any one of claims 1 to 12, wherein the main chain is formed of an acyclic structure alone.

14. A rubber composition containing a rubber component that contains the modified multicomponent copolymer of any one of claims 1 to 13.

15. The rubber composition according to claim 14, further containing a filler.

16. The rubber composition according to claim 15, wherein the content of the filler is 30 to 100 parts by mass relative to 100 parts by mass of the rubber component.

17. A resin composition containing the modified multicomponent copolymer of any one of claims 1 to 13.

18. A tire using the rubber composition of any one of claims 14 to 16.

19. A resin product using the resin composition of claim 17.

Fig. 1

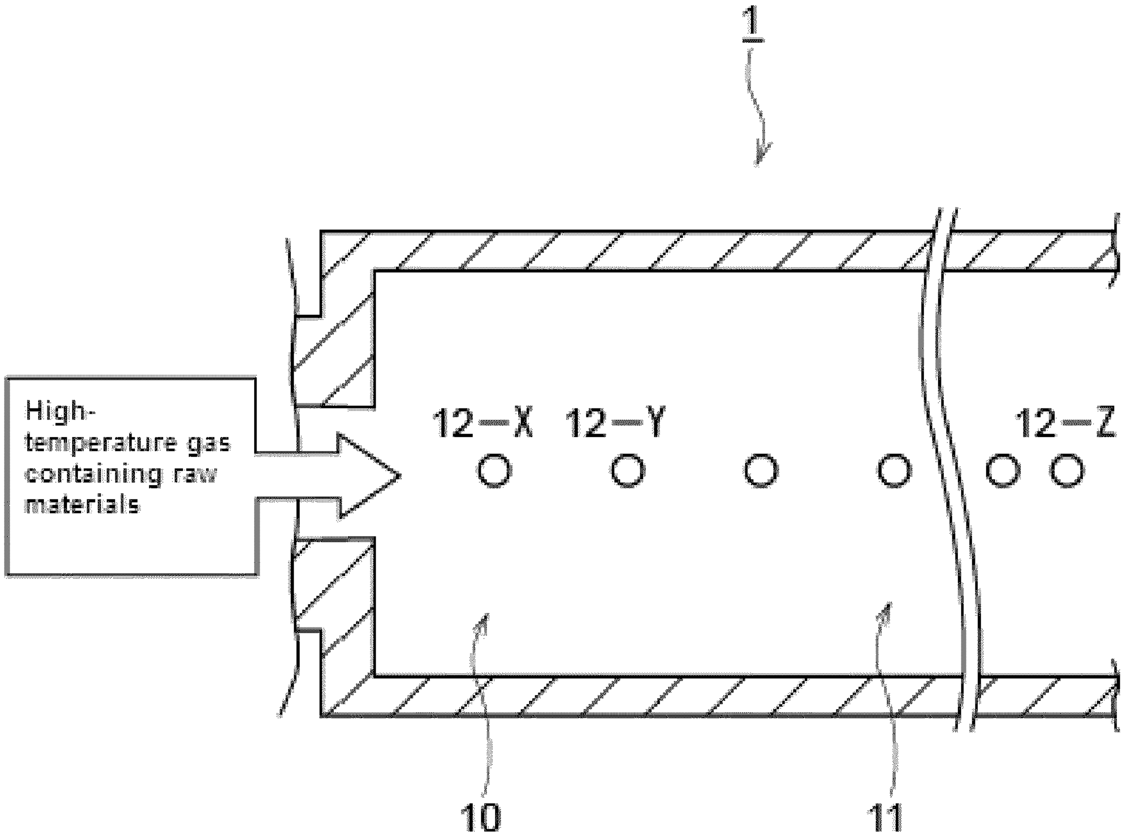
1
High-temperature gas containing raw materials
12-X
12-Y
12-Z
10
11

# INTERNATIONAL SEARCH REPORT

International application No.
PCT/JP2019/034469

A. CLASSIFICATION OF SUBJECT MATTER
Int.Cl. C08L23/16(2006.01)i, B60C1/00(2006.01)i, C08C19/00(2006.01)i, C08F210/00(2006.01)i, C08F236/04(2006.01)i, C08K3/013(2018.01)i, C08L15/00(2006.01)i, C08L23/26(2006.01)i, C08L101/00(2006.01)i

According to International Patent Classification (IPC) or to both national classification and IPC

B. FIELDS SEARCHED

Minimum documentation searched (classification system followed by classification symbols)
Int.Cl. C08L1/00-101/14, B60C1/00, C08C19/00-19/44, C08F6/00-246/00, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 11-80269 A (MITSUI CHEMICALS, INC.) 26 March 1999, claims 1-33, paragraphs [0002], [0014]-[0015], [0163]-[0168], [0209]-[0211], [0233], examples & US 6310164 B1, claims 1-27, column 1, lines 17-26, column 2, line 56 to column 3, line 2, column 21, line 10 to column 22, line 2, column 26, lines 44-64, column 31, lines 51-65, examples & EP 891993 A1 | 1-12, 14-19<br>13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 November 2019 (05.11.2019) | 12 November 2019 (12.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/034469

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 11-35810 A (MITSUI CHEMICALS, INC.) 09 February 1999, claims 1-10, paragraphs [0123]-[0139], examples (Family: none) | 1-12, 14-17, 19<br>13, 18 |
| X<br>Y<br>A | JP 8-113705 A (JAPAN SYNTHETIC RUBBER CO., LTD.) 07 May 1996, claims 1-2, paragraphs [0010], [0013], examples (Family: none) | 1-12, 14-17, 19<br>13<br>18 |
| X<br>Y<br>A | WO 2017/065299 A1 (BRIDGESTONE CORPORATION) 20 April 2017, claims 1-13, paragraphs [0020], [0154], [0157]-[0158], examples & US 2018/0291185 A1, claims 1-20, paragraphs [0041], [0240]-[0244], [0250]-[0251], examples & EP 3363824 A1 | 1-4, 7-19<br>13<br>5-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015190072 A
- WO 2018092733 A
- WO 2010038768 A